# EUROPEAN PATENT SPECIFICATION

(11) **EP 3 546 643 B1**
(45) Date of publication and mention of the grant of the patent: **16.06.2021**
(21) Application number: 19165228.8
(22) Date of filing: 26.03.2019
(51) Int. Cl.: D06P 5/00, C09D 11/322, D06P 5/22, D06P 5/30, C09D 11/102, C09D 11/107, C09D 11/38

(54) **PIGMENT PRINTING INK JET INK COMPOSITION AND PIGMENT PRINTING INK JET RECORDING METHOD**
PIGMENTDRUCKTINTENSTRAHLTINTENZUSAMMENSETZUNG UND PIGMENTDRUCKTINTENSTRAHLAUFZEICHNUNGSVERFAHREN
COMPOSITION D'ENCRE DE JET D'ENCRE D'IMPRESSION PIGMENTAIRE ET PROCÉDÉ D'IMPRESSION DE JET D'ENCRE PIGMENTAIRE

(30) Priority: 26.03.2018 JP 2018057899
(43) Date of publication of application: 02.10.2019
(73) Proprietor: Seiko Epson Corporation, Tokyo 160-8801 (JP)
(72) Inventor: OHASHI, Masakazu, Suwa-shi, Nagano 392-8502 (JP); CHIDATE, Kosuke, Suwa-shi, Nagano 392-8502 (JP); MIYABAYASHI, Toshiyuki, Suwa-shi, Nagano 392-8502 (JP)
(74) Representative: Miller Sturt Kenyon

(56) References cited:
- US-A1- 2016 376 455
- US-A1- 2017 121 543
- US-A1- 2017 361 632
- DATABASE WPI Week 201804 2017 Thomson Scientific, London, GB; AN 2017-89925K XP002792366, -& JP 2017 226743 A (RICOH KK) 28 December 2017 (2017-12-28)

## Description

### BACKGROUND

### 1. Technical Field

The present invention relates to a pigment printing ink jet ink composition and a pigment printing ink jet recording method.

### 2. Related Art

Printing for dying a fabric may be performed using an ink jet recording method. In the related art, screen printing, roller printing are used as recording methods for cloth such as woven or non-woven fabrics. However, ink jet recording method is advantageous as it increases productivity when printing in small quantities and printability and therefore studies of this method have been performed. Examples of inkjet printing methods and inks are described in JP 2017/226 743; US 2017/361 632; US 2017/121543; and US 2016/376 455.

In printing using the ink jet recording method, an ink composition (hereinafter, referred to as "ink") is mixed with a pigment and a fixing resin to perform printing on a fabric and the so-called pigment printing inkjet recording method (hereinafter, referred to as "pigment printing") is also has also been investigated (for example, JP-A-2017-51952).

### SUMMARY

The present invention provides a pigment printing inkjet ink composition and a pigment printing ink jet recording method having excellent color developing properties with respect to various cloths.

The pigment printing ink jet composition and the pigment printing ink jet recoding method of the invention are defined respectively according to independent claims 1 and 8.

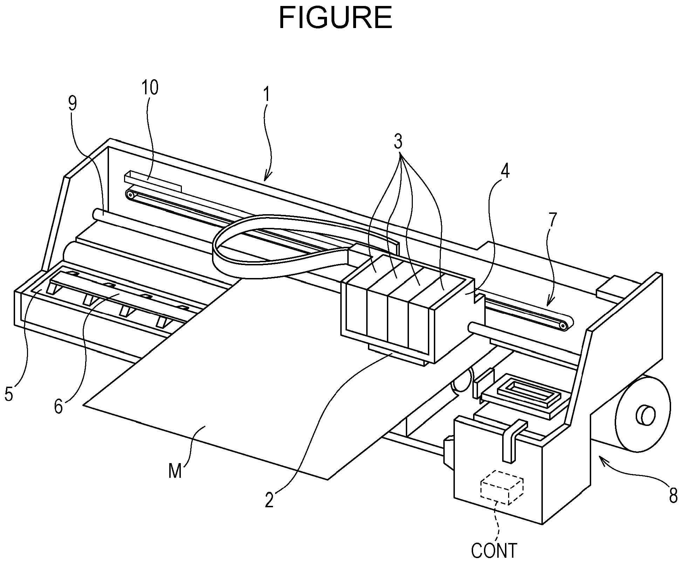

### BRIEF DESCRIPTION OF THE DRAWING

The invention will be described with reference to the accompanying drawing, wherein like numbers reference like elements.

Figure is an overall perspective view of a printing apparatus performing a pigment printing ink jet recording method according to the invention.

### DETAILED DESCRIPTION

The invention is described in greater detail below.

The pigment printing ink jet ink composition according to this invention includes a pigment, resin particles, an organic solvent and water and the organic solvent comprises an amide compound represented by the following general formula (1).

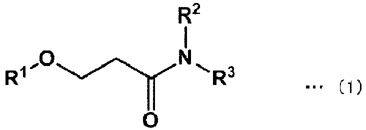

In general formula (1), R¹ represents a straight chain or branched alkyl group having 1 to 6 carbon atoms and R² and R³ each independently represent hydrogen atoms or a straight chain or branched alkyl group having 1 to 4 carbon atoms.,
the ink composition further includes a dispersing agent;
the content of the resin particles is equal to or more than 3% by mass; and
the content of the amide compound represented by the general formula (1) is equal to or more than 18% by mass, with respect to a total mass of the pigment printing ink jet ink composition.

In addition, the invention provides a pigment printing ink jet recording method comprising ejecting the pigment printing ink jet ink composition according to this invention from an ink jet nozzle and attaching it to a fabric.

Hereinafter, the pigment printing ink jet ink composition and the pigment printing ink jet recording method according to this invention will be described in detail in an order of: a configuration of an executable printing apparatus, the pigment printing ink jet ink composition (hereinafter, also referred to as "pigment printing ink", "ink composition" and "ink"), a processing liquid composition that may be used in combination with the pigment printing ink jet ink composition (hereinafter, also referred to as "processing liquid"), a fabric for performing the pigment printing ink jet recording method and the pigment printing ink jet recording method. In the present specification, the terms "cloth", "fabric" and "textile" are used interchangeably.

### 1. Printing Apparatus

First, an example of a printing apparatus used in this disclosure will be described with reference to the figure.

The printing apparatus used in this disclosure will be described by way of example with reference to an on-carriage type printer in which an ink cartridge is installed in a carriage. The printing apparatus may alternatively be an off-carriage type printer in which an ink cartridge is fixed outside rather than being installed in a carriage.

The printer used in the following description is a serial printer in which a print head is installed in a carriage moving in a predetermined direction and the head moves in accordance with the movement of the carriage to eject liquid droplets on a recording media. However, the printing apparatus used in the invention is not limited to a serial printer but may also be a line printer in which the head is wider than the width of a recording medium and the print head ejects liquid droplets onto the recording medium without moving.

In in the Figure to which the following description refers, the size of each element is appropriately changed in order to enlarge it into a recognizable size.

An example of a suitable printing apparatus is an ink jet type printer (hereinafter, referred to as "printer") in which an ink jet head shown in the Figure is installed. As shown in the Figure, a printer 1 includes: a carriage 4 in which an ink jet head 2 is installed and on which an ink cartridge 3 is detachably mounted; a platen 5 which is provided under the ink jet head 2 and to which cloth M that functions as a recording medium is transported; a heating mechanism 6 for heating the cloth M; a carriage moving mechanism 7 which moves the carriage 4 in a medium width direction of the cloth M; and a medium feeding mechanism 8 that transports the cloth M in a medium feeding direction. In addition, the printer 1 includes a control device CONT that controls operation of the whole printer 1. The medium width direction indicates a main scanning direction (hereinafter, head scanning direction). The medium feeding direction indicates a sub-scanning direction (direction perpendicular to the main scanning direction).

The ink jet head 2 is a unit that attaches an ink or a processing liquid onto the cloth M and includes a plurality of nozzles (not shown), through which an ink is ejected, on a surface opposing the cloth M onto which the ink is to be attached. The plurality of nozzles is disposed in a line formation forming a nozzle face on a nozzle plate surface.

Examples of methods of ejecting an ink from a nozzle include:
applying a strong electric field between a nozzle and an acceleration electrode in front of the nozzle, continuously ejecting droplets of a liquid ink from the nozzle and ejecting the ink corresponding to a recording information signal while the liquid droplets of the ink fly between deflecting electrodes (electrostatic attraction method);
forcefully ejecting liquid droplets of an ink by applying pressure to a processing liquid with a small pump and mechanically vibrating a nozzle with a crystal vibrator;
simultaneously applying pressure and a recording information signal to an ink with a piezoelectric element and ejecting and recording liquid droplets of the ink (piezo method);
heating and foaming an ink with a minute electrode in accordance with a recording information signal and ejecting and recording liquid droplets of the ink (thermal jet method).

The ink jet head 2 may be either a line type ink jet head or a serial type ink jet head but in the embodiment of the Figure, a serial type ink jet head is used.

The printing apparatus including a serial type ink jet head performs recording by performing scanning (pass) a plurality of times, wherein in each pass an ink is ejected while relatively moving a recording ink jet head with respect to a recording medium. Specific examples of serial type ink jet heads include those in which an ink jet head is installed in a carriage moving in a width direction of a recording medium (direction intersecting transporting direction of recording medium) and the ink jet head moves in accordance with the movement of the carriage to eject liquid droplets onto the recording medium.

In contrast, a printing apparatus including a line type ink jet head performs recording by performing scanning (pass) once, wherein, in the pass, an ink is ejected while relatively moving an ink jet head with respect to a recording medium. Specific examples of line type ink jet heads include those in which an inkjet head is formed wider than a width of a recording medium and the ink jet head ejects liquid droplets on the recording medium without moving.

The ink cartridge 3 that supplies an ink to the ink jet head 2 includes four ink cartridges. Each of the four cartridges may be filled with a different kind of ink. The ink cartridge 3 is detachably mounted with respect to the ink jet head 2. In the example of the Figure, the number of cartridges is 4 but it is possible to install any desired number of cartridges.

**The** carriage 4 is supported by a guide rod 9 which is a support member provided in the main scanning direction. In addition, the carriage 4 is moved in the main scanning direction along the guide rod 9 by the carriage moving mechanism 7. Although the example of Figure shows that the carriage 4 moves in the main scanning direction, the carriage 4 may move in the sub-scanning direction, in addition to the movement in the main scanning direction.

An installation position of the heating mechanism 6 is provided at a position capable of heating the cloth M. In the example of the Figure, the heating mechanism 6 is provided at a position opposing the ink jet head 2, on the platen 5. With this configuration, if the heating mechanism 6 is provided at a position opposing the ink jet head 2, it is possible to reliably heat a position onto which liquid droplets are attached in the cloth M and thus it is possible to effectively dry the liquid droplets attached to the cloth M.

Examples of suitable heating mechanisms 6 include:
heating the cloth M by bringing the cloth M into contact with a heat source;
emitting infrared rays or a microwave (electromagnetic wave with a maximum wavelength of about 2,450 MHz);
spraying hot air.

Heating of the cloth M by the heating mechanism 6 is performed before or at the time when liquid droplets ejected from the nozzle of the ink jet head 2 are attached onto the cloth M. All conditions of heating (for example, timing for performing heating, heating temperature, heating time) are controlled by the control device CONT.

Heating of the cloth M by the heating mechanism 6 is performed such that the cloth M maintains a temperature range of equal to or more than 35°C and equal to or less than 65°C, as this leads to improvements in spreading, permeability and dryness of the ink and ejection stability. The temperature of heating the cloth M refers to the temperature of the surface of the cloth M on which recording is performed at the time of heating.

**The** printer 1 may further include a second heating mechanism (not shown) in addition to the heating mechanism 6. In this case, the second heating mechanism is provided downstream in the transporting direction of the cloth M from the heating mechanism 6. The second heating mechanism performs heating of the cloth M after the cloth M is heated by the heating mechanism 6, that is, after liquid droplets ejected from the nozzle are attached onto the cloth M. With this, dryness of the liquid droplets of the ink attached onto the cloth M is improved. As the second heating mechanism, any of the mechanisms described as the heating mechanism 6 (for example a dryer mechanism, a heat press machine) can be used. It is preferable that heating by the second heating mechanism be performed such that the cloth M maintains a temperature range of equal to or more than 100°C and equal to or less than 200°C.

A linear encoder 10 detects the position of the carriage 4 in the main scanning direction with a signal. The detected signal is sent to the control device CONT as position information. The control device CONT recognizes a scanning position of the ink jet head 2 based on the position information from the linear encoder 10 and controls the recording operation (ejecting operation) and the like by the ink jet head 2. In addition, the control device CONT is configured to change and control the movement speed of the carriage 4.

### 2. Pigment Printing Ink Jet Ink Composition

The pigment printing ink jet ink composition of the disclosure includes a pigment, particles of a resin, an organic solvent and water. The organic solvent includes an amide compound represented by the following general formula (1). 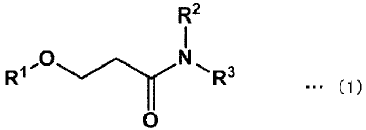 wherein R¹ represents a straight chain or branched alkyl group having 1 to 6 carbon atoms; and R² and R³ each independently represent hydrogen atoms or a straight chain or branched alkyl group having 1 to 4 carbon atoms.

Hereinafter, the pigment printing ink jet ink composition will be described.

### 2. 1. Pigment

The pigment printing ink jet ink composition comprises a pigment. As the pigment is attached onto the cloth, printing is performed on the cloth and thereby it is possible to obtain printed matter (printed product).

The pigment may be either of an organic pigment and an inorganic pigment and can be any color. Either type of pigment provides printed matter having excellent color developing properties.

Examples of a white pigment include a white inorganic pigment such as titanium oxide, zinc oxide, zinc sulfide, antimony oxide and zirconium oxide. In addition to the white inorganic pigment, it is also possible to use a white organic pigment such as white hollow resin particles or polymer particle.

Examples of a color index (C.I.) of the white pigment include C.I. pigment white 1 (basic lead carbonate), 4 (zinc oxide), 5 (mixture of zinc sulfide and barium sulfate), 6 (titanium oxide), 6:1 (titanium oxide including other metal oxide), 7 (zinc sulfide), 18 (calcium carbonate), 19 (clay), 20 (mica titanium), 21 (barium sulfate), 22 (natural barium sulfate), 23 (gloss white), 24 (alumina white), 25 (plaster), 26 (magnesium oxide/silicon oxide), 27 (silica), 28 (anhydrous calcium silicate). Titanium oxide is a preferred white pigment since it has excellent color developing properties, concealability and visibility (brightness) and can be obtained with a favorable dispersion particle diameter.

When the white pigment is titanium oxide, a general rutile type titanium oxide is preferred. The rutile type titanium oxide may be manufactured or may be commercially available. Examples of known industrial production methods for rutile type titanium oxide (powder form) include a sulfuric acid method and a chloride method. Examples of commercially available rutile type titanium oxide products include rutile types of Tipaque (registered trademark) CR-60-2, CR-67, R-980, R-780, R-850, R-980, R-630, R-670 and PF-736 (hereinabove, trade name, manufactured by Ishihara Industries).

Examples of chromatic color pigment include pigments other than the white pigment. Suitable chromatic color pigments include organic pigments such as azo-based pigments, phthalocyanine-based pigments, dye-based pigments, condensed polycyclic pigments, nitro-based pigments and nitroso-based pigments (Brilliant Carmine 6B, Lake Red C, Watching Red, Disazo Yellow, Hansa Yellow, Phthalocyanine Blue, Phthalocyanine Green, Alkali Blue, Aniline Black), metals such as cobalt, iron, chrome, copper, zinc, lead, titanium, vanadium, manganese and nickel, metal oxide and sulfide, carbon blacks such as furnace carbon black, lamp black, acetylene black and channel black (C.I. pigment black 7) and inorganic pigments such as yellow soil, ultramarine blue and dark blue.

More specifically, examples of the carbon black used as a black pigment include No. 2300, No. 900, MCF88, No. 33, No. 40, No. 45, No. 52, MA7, MA8, MA100, No. 2200B (hereinabove, trade name, manufactured by Mitsubishi Chemical Corporation), Raven 5750, Raven 5250, Raven 5000, Raven 3500, Raven 1255, Raven 700 (hereinabove, trade name, manufactured by Columbia Carbon Corporation), Regal 400R, Regal 330R, Regal 660R, Mogul L, Monarch 700, Monarch 800, Monarch 880, Monarch 900, Monarch 1000, Monarch 1100, Monarch 1300, Monarch 1400 (hereinabove, trade name, manufactured by Cabot Corporation), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 (hereinabove, trade name, manufactured by Degussa Corporation).

Examples of a yellow pigment include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, 180.

Examples of a magenta pigment include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245 and C.I. Pigment Violet 19, 23, 32, 33, 36 38, 43, 50.

Examples of a cyan pigment include C.I. Pigment Blue 1, 2, 3, 15, 15:1, 15:2, 15;3, 15:34, 15:4,16, 18, 22, 25, 60, 65, 66 and C.I. Vat Blue 4, 60.

Examples of a pigment other than black, yellow, magenta and cyan include C.I. Pigment Green 7, 10, C.I. Pigment Brown 3, 5, 25, 26, C.I. Pigment Orange 1, 2, 5, 7, 13, 14, 15, 16, 24, 34, 36, 38, 40, 43, 63.

One of the pigments described above may be used alone or two or more thereof may be used in combination.

**The** content of the pigment included in the pigment printing ink jet ink varies depending on the kind of the pigment used, but for ensuring favorable color developing properties, the pigment content is preferably equal to or more than 1% by mass, more preferably equal to or more than 3% by mass and still more preferably equal to or more than 4% by mass, with respect to a total mass of the ink. In addition, the content of the pigment is preferably equal to or less than 30% by mass, more preferably equal to or less than 15% by mass and still more preferably equal to or less than 12% by mass.

When preparing a pigment printing ink jet ink composition, a pigment dispersing liquid in which a pigment is dispersed may be prepared beforehand and the obtained pigment dispersing liquid may be added and mixed to other material dispersing liquid. Examples of methods of obtaining a pigment dispersing liquid include:
dispersing a pigment in a dispersion medium using a resin dispersing agent.

### Resin Dispersing Agent

**The** resin dispersing agent and examples thereof include polyvinyl alcohols, polyvinyl pyrollidones, polyacrylic acids, an acrylic acid-acrylonitrile copolymer, a vinyl acetate-acrylic acid ester copolymer, an acrylic acid-acrylic acid ester copolymer, a styrene-acrylic acid copolymer, a styrene-methacrylic acid copolymer, a styrene-methacrylic acid-acrylic acid ester copolymer, a styrene-α-methylstyrene-acrylic acid copolymer, a styrene-α-methylstyrene-acrylic acid-acrylic acid ester copolymer, a styrene-maleic acid copolymer, a styrene-anhydrous maleic acid copolymer, a vinyl naphthalene-acrylic acid copolymer, a vinyl naphthalene-maleic acid copolymer, a vinyl acetate-maleic acid ester copolymer, a vinyl acetate-crotonic acid polymer, a vinyl acetate-acrylic acid copolymer and salts thereof. Particularly preferred dispersing resins include copolymers of a monomer having a hydrophobic functional group and a monomer having a hydrophilic functional group and polymers of a monomer having both a hydrophobic functional group and a hydrophilic functional group. Such a copolymer can be in any form of a random copolymer, a block copolymer, an alternating copolymer or a graft copolymer.

A commercially available product can be used as the resin dispersing agent. Specific examples thereof include Joncryl 67 (weight average molecular weight: 12,500, acid number: 213), Joncryl 678 (weight average molecular weight: 8,500, acid number: 215), Joncryl 586 (weight average molecular weight: 4,600, acid number: 108), Joncryl 611 (weight average molecular weight: 8,100, acid number: 53), Joncryl 680 (weight average molecular weight: 4,900, acid number: 215), Joncryl 682 (weight average molecular weight: 1,700, acid number: 238), Joncryl 683 (weight average molecular weight: 8,000, acid number: 160), Joncryl 690 (weight average molecular weight: 16,500, acid number: 240) (hereinabove, trade name, manufactured by BASF Japan Corporation).

### 2. 2. Resin Particle

The pigment printing ink jet ink composition according includes particles of a resin. The resin particles have the function of improving the fixability of an image formed by the ink composition by forming a resin film when heated after recording has taken place. They can also improve washing solidity and friction fastness of the image. The resin particles may be in an emulsion state or a solution state. However, it is preferable to use resin particles in an emulsion state from a viewpoint of suppressing a rise in the viscosity of the ink.

The resin of the resin particles may be an acrylate-based resin, a styrene acrylate-based resin, a fluorene-based resin, a urethane-based resin, a polyolefin-based resin, a rosin-modified resin, a terpene-based resin, a polyester-based resin, a polyamide-based resin, an epoxy-based resin, a vinyl chloride resin, a vinyl chloride-vinyl acetate copolymer or a vinyl ethylene acetate-based resin. One of these resins may be used alone or two or more thereof may be used in combination.

Preferably, the resin of the resin particle is at least one selected from a urethane resin and an acrylate-based resin since this provides high design flexibility is high and thus desired physical properties are easily obtained. The urethane resin is more preferable from the viewpoint of securing the texture of the cloth and making the friction fastness favorable. The urethane resin may be any urethane resin such as a polyester-based urethane resin including an ether bond, a polyester-based urethane resin including an ester bond and a polycarbonate-based urethane resin including a carbonate bond. When the urethane resin is cross-linked, the degree of elongation at a rupture point, 100% modulus of the cross-linking body can be adjusted by changing the number of cross-linking locations and the nature of the main polymer chain. Urethane resin including a cross-linking group and having a polycarbonate skeleton or a polyester skeleton have a favorable balance between the degree of elongation at a rupture point and the 100% modulus and are more preferable from the viewpoint of improving the friction fastness of an image and the texture of a printed matter. Of these, polycarbonate-based urethane resins having a polycarbonate skeleton are preferable since they tend to be able to make the friction fastness favorable.

The urethane resin is preferably a polycarbonate-based urethane resin and/or includes a cross-linking group. Examples of the cross-linking groups include isocyanate groups and silanol groups. Preferably, the cross-linking group is a blocked isocyanate group in which the isocyanate group is chemically protected (i.e. capped or blocked). A blocked isocyanate group may be activated by being de-protected by heating and reacts to form a bond such as a urethane bond, a urea bond or an allophanate bond.

A urethane resin including a cross-linking group preferably comprises three or more cross-linking groups per molecule such that a cross-linked structure is formed by reaction of the cross-linking groups. The "urethane resin" in the present specification indicates a resin which is formed when an isocyanate group reacts with other reactive groups, for example, a hydroxyl group, an amino group, a urethane bond group, a carboxyl group and comprises a urethane bond, a urea bond or an allophanate bond. Therefore, for example, a urea resin falls within the definition of a urethane resin according to the present specification. The urethane resin is preferably a compound having a urethane bond obtained by reacting a compound comprising an isocyanate group with a compound comprising a hydroxyl group.

A "blocked isocyanate" comprises a latent isocyanate group obtained by blocking the isocyanate group with a blocking agent and can be obtained by reacting a polyisocyanate compound with a blocking agent.

Examples of polyisocyanates compound include a polyisocyanate monomer and a polyisocyanate derivative. Examples of polyisocyanate monomers include aromatic polyisocyanates, aromatic aliphatic polyisocyanates, aliphatic polyisocyanates and alicyclic polyisocyanates. One of the polyisocyanate monomers can be used alone or two or more thereof can be used in combination.

Examples of polyisocyanate derivatives include:
allophanate-modified entities, which may be produced by reacting a polyisocyanate monomer with a low-molecular polyol; dimers or polymers of the polyisocyanate monomer;
isocyanurate-modified entities;
trimers, pentamer and septamers of an iminooxadiazinedione-modified entity;
a polyol-modified body (alcohol adduct), which may be generated by reacting the polyisocyanate monomer with a low-molecular polyol;
a biuret-modified entity, which may be generated by reacting the polyisocyanate monomer with water or an amine;
a urea-modified entity, which may be generated by reacting the polyisocyanate monomer with a diamine;
an oxadiazinetriol-modified entity, which may be generated by reacting the polyisocyanate monomer and carbonic acid gas;
a carbodiimide-modified body, which may be generated by decarboxylation and condensation of the polyisocyanate monomer;
a uretodione-modified entity; or
a uretonimine-modified entity.

When two or more of the polyisocyanate compounds are used in combination, for example, when producing a blocked isocyanate, the two or more polyisocyanate compounds may be simultaneously reacted. Alternatively, blocked isocyanates obtained from separate reactions with each of the polyisocyanate compounds may be mixed with each other.

The blocking agent blocks and inactivates an isocyanate group, which can then be regenerated or activated by deblocking. In addition, the blocking agent also has a catalytic action of activating the isocyanate group in a blocked state and in a deblocked state.

Examples of blocking agents include imidazole-based compounds, imidazoline-based compounds, pyrimidine-based compounds, guanidine-based compounds, alcohol-based compounds, phenol-based compounds, active methylene-based compounds, amine-based compounds, imine-based compounds, oxime-based compounds, carbamic acid-based compounds, urea-based compounds, acid amide-based (lactam-based) compounds, acid imide-based compounds, a triazole-based compounds, pyrazole-based compounds, mercaptan-based compounds and bisulfates.

The blocking agent will be exemplified in detail below. For the exemplified compounds, dissociation temperatures are also described. This is the required temperature for regenerating the isocyanate group.

Examples of imidazole-based blocking agents include imidazole (dissociation temperature 100°C), benzimidazole (dissociation temperature 120°C), 2-methylimidazole (dissociation temperature 70°C), 4-methylimidazole (dissociation temperature 100°C), 2-ethylimidazole (dissociation temperature 70°C), 2-isopropylimidazole, 2,4-dimethylimidazole and 2-ethyl-4-methylimidazole.

Examples of imidazoline-based blocking agents include 2-methylimidazoline (dissociation temperature 110°C) and 2-phenylimidazole.

### Examples of pyrimidine-based blocking agents include 2-methyl-1,4,5,6-tetrahydropyrimidine

Examples of guanidine-based blocking agents include 3,3-dialkylguanidines such as 3,3-dimethylguanidine; 1,1,3,3-tetraalkylguanidines such as 1,1,3,3-tetramethylguanidine (dissociation temperature 120°C) and 1,5,7-triazabicyclo[4.4.0]deca-5-en.

Examples of alcohol-based blocking agents include methanol, ethanol, 2-propanol, n-butanol, s-butanol, 2-ethylhexyl alcohol, 1-or 2-octanol, cyclohexyl alcohol, ethylene glycol, benzyl alcohol, 2,2,2-trifluoroethanol, 2,2,2-trichloroethanol, 2-(hydroxymethyl)furan, 2-methoxyethanol, methoxypropanol, 2-ethoxyethanol, n-propoxyethanol, 2-butoxypropanol, 2-ethoxyethoxyethanol, 2-ethoxybutoxyethanol, butoxyethoxyethanol, 2-butoxyethylethanol, 2-butoxyethoxyethanol, N,N-dibutyl-2-hydroxyacetoamide, N-hydroxysuccinimide, N-morpholine ethanol, 2,2-dimethyl-1,3-dioxsolane-4-methanol, 3-oxazolidine ethanol, 2-hydroxymethyl pyridine (dissociation temperature 140°C), furfuryl alcohol, 12-hydroxy stearic acid, triphenyl silanol and methacrylic acid 2-hydroxy ethyl.

Examples of phenol-based blocking agents include phenol, cresol, ethyl phenol, n-propyl phenol, isopropyl phenol, n-butyl phenol, s-butyl phenol, t-butyl phenol, n-hexyl phenol, 2-ethylhexyl phenol, n-octyl phenol, n-nonyl phenol, di-n-propyl phenol, diisopropyl phenol, isopropyl cresol, di-n-butyl phenol, di-s-butyl phenol, di-t-butylphenol, di-n-octyl phenol, di-2-ethylhexyl phenol, di-n-nonyl phenol, nitrophenol, bromophenol, chlorophenol, fluorophenol, dimethyl phenol, styrenated phenol, methyl salicylate, 4-hydroxybenzonate methyl, 4-hydroxybenzonate benzyl, hydroxybenzonate 2-ethylhexyl, 4-[(dimethylamino)methyl]phenol, 4-[(dimethylamino)methyl]-nonylphenol, bis(4-hydroxy phenol)acetate, 2-hydroxypyridine (dissociation temperature 80°C), 2-or 8-hydroxyquinoline, 2-chloro-3-pyridinol and pyridine-2-thiol (dissociation temperature 70°C).

Examples of active methylene-based blocking agents include Meldrum's acid (2,2-dimethyl-1,3-dioxane-4,6-dione); dialkyl malonates such as dimethyl malonate, diethyl malonate, di-n-butyl malonate, di-t-butyl malonate, di-2-ethylhexyl malonate, methyl-n-butyl malonate, ethyl-n-butyl malonate, methyl-s-butyl malonate, ethyl-s-butyl malonate, methyl-t-butyl malonate, ethyl-t-butyl malonate, diethyl methylmalonate, dibenzyl malonate, diphenyl malonate, benzylmethyl malonate, ethylphenyl malonate, t-butylphenyl malonate and isopropylidene malonate; alkyl acetoacetates such as methyl acetoacetate, ethyl acetoacetate, n-propyl acetoacetate, isopropyl acetoacetate, n-butyl acetoacetate, t-butyl acetoacetate, benzyl acetoacetate and phenyl acetoacetate; 2-acetoacetoxyethyl methacrylate, acetyl acetone and ethyl cyanoacetate

Examples of amine-based blocking agents include dibutyl amine, diphenyl amine, aniline, N-methyl aniline, carbazole, bis(2,2,6,6-tetramethyl piperidinyl)amine, di-n-propyl amine, diisopropyl amine (dissociation temperature 130°C), isopropylethyl amine, 2,2,4-,or, 2,2,5-trimethylhexamethylne amine, N-isopropyl cyclohexyl amine (dissociation temperature 140°C), dicyclohexyl amine (dissociation temperature 130°C), bis(3,5,5-trimethylcyclohexyl)amine, pyridine, 2,6-dimethyl piperidine (dissociation temperature 130°C), t-butylmethyl amine, t-butylethyl amine (dissociation temperature 120°C), t-butylpropyl amine, t-butylbutyl amine, t-butylbenzyl amine (dissociation temperature 120°C), t-butylphenyl amine, 2,2,6-trimethyl piperidine, 2,2,6,6-tetramethyl piperidine (dissociation temperature 80°C), (dimethyl amine)-2,2,6,6-tetramethyl piperidine, 2,2,6,6-tetraemthyl-4-piperidine, 6-methyl-2-piperidine and 6-aminocaproic acid.

Examples of imine blocking agents include ethylene imine, polyethylene imine, 1,4,5,6-tetrahydropyrimidine and guanidine.

Examples of oxime blocking agents include formaldoxime, acetoaldoxime, acetoxime, methylethyl ketoxime (dissociation temperature 130°C), cyclohexanone oxime, diacetylmonoxime, penzofenoxime, 2,2,6,6-tetramethyl cyclohexanone oxime, diisopropyl ketone oxime, methyl t-butylketone oxime, diisobutyl ketone oxime, methyl isobutyl ketone oxime, methyl isopropyl ketone oxime, methyl 2,4-dimethyl pentyl ketone oxime, methyl 3-ethyl heptyl ketone oxime, methyl isoamyl ketone oxime, n-amyl ketone oxime, 2,2,4,4-tetramethyl-1,3-cyclobutanedione monoxime, 4,4'-dimethoxy benzophenone oxime and 2-heptanone oxime.

Examples of carbamic acid-based blocking agents include N-phenyl carbamic acid phenyl ester.

Examples of urea-based blocking agentsinclude urea, thiourea and ethylene urea.

Examples of acid amide-based (lactam-based) blocking agentsinclude acetanilide, N-methylacetamide, acetic acid amide, ε-caprolactam, δ-valerolactam, γ-butyrolactam, pyrrolidone, 2,5-piperazinedione and laurolactam.

Examples of acid amide-based blocking agentsinclude succinimide, maleate imide and phthalimide.

Examples of triazole-based blocking agentsinclude 1,2,4-triazole, benzotriazole.

Examples of pyrazole-based blocking agentsinclude pyrazole, 3,5-dimethyl pyrazole (dissociation temperature 120°C), 3,5-diisopropyl pyrazole, 3,5-diphenyl pyrazole, 3,5-di-t-butyl pyrazole, 3-methyl pyrazole, 4-benzyl-3,5-dimethyl pyrazole, 4-nitro-3,5-dimethyl pyrazole, 4-buromo-3,5-dimethyl pyrazole and 3-methyl-5-phenyl pyrazole.

Examples of mercaptan-based blocking agentsinclude butyl mercaptan, dodecyl mercaptan and hexyl mercaptan.

Examples of bisulfite blocking agents include sodium hydrogensulfite.

The blocking may include benzoxazolone, anhydrous isatoic acid and tetrabutyl phosphonium/acetate.

A blocking agent can be used alone, or two or more thereof can be used in combination. The dissociation temperature of the blocking agent can be appropriately selected. For example, the dissociation temperature is equal to or more than 60°C and equal to or less than 230°C, preferably equal to or more than 80°C and equal to or less than 200°C, more preferably equal to or more than 100°C and equal to or less than 180°C and still more preferably equal to or more than 110°C and equal to or less than 160°C. If the dissociation temperature is within the temperature range, it is possible to lengthen the shelf life of the pigment printing ink jet ink composition and to prevent the temperature during the heating step from being too high.

**The** main chain of the urethane-based resin including a cross-linking group may be any of a polyether type including an ether bond, a polyester type including an ester bond and a polycarbonate type including a carbonate bond. The degree of elongation at a rupture point and 100% modulus of a urethane resin including a cross-linking group (cross-linking body) can be adjusted by changing the number and locations of the cross-linking points and the type of main chain. Urethane resins including a cross-linking group and having a polycarbonate skeleton or a polyester skeleton have a favorable balance between the degree of elongation at a rupture point and the 100% modulus and are therefore more preferable from the viewpoint of easily improving the friction fastness of an image and the texture of a printed matter. In addition, polycarbonate-based urethane resins having a polycarbonate skeleton are preferable since they tend to give favorable friction fastness. In addition, the pigment becomes easily fixed on the cloth surface and provide printed matter having excellent color developing properties and friction fastness.

In some cases, however, when the resin is a polycarbonate-based resin or a urethane resin including a cross-linking group, the resin particle may form a film in a printer nozzle and thus clogging occurs. However, when such a resin is used in combination with the organic solvent comprising the amide compound of general formula (1),, it is possible to suppress clogging due to film formation.

In a cross linked urethane-based resin, the degree of elongation at the rupture point of the cross-linked urethane-based resin is equal to or more than 150%, preferably equal to or more than 170%, more preferably equal to or more than 200% and further more preferably equal to or more than 300%. The texture of the printed matter can be improved when the number of cross-linking locations and the nature of the main polymer chain are selected such that the degree of elongation at a rupture point is within the above range.

A value for the degree of elongation at a rupture point can be obtained by curing a urethane resin emulsion including a cross-linking group, preparing a film having a thickness of approximately 60 µm and performing measurement in the condition of a tensile test gauge length of 20 mm and a tensile speed of 100 mm/minute. The 100% modulus is a value obtained by measuring the tensile stress when the film in the tensile test is extended by 100% with respect to the original length. The film to be measured may be formed from an emulsion of the cross-linked urethane resin or may be formed by molding using the resin. However, it is preferable that the film to be measured be formed by using a resin emulsion resin.

**The** urethane resin including a cross-linking group may be mixed in an emulsion form. Such a resin emulsion is a so-called self-reactive urethane resin emulsion. Suitable emulsions of urethane resins comprising an isocyanate group blocked with a blocking agent comprising a hydrophilic group are commercially available.

Examples of such commercially available urethane resin comprising a cross-linking group include Takelac WS-6021 (trade name, manufactured by Mitsui Chemicals & SKC Polyurethanes Inc., urethane resin emulsion, polyether-based polyurethane, having a polyether-derived skeleton), WS-5100 (trade name, manufactured by Mitsui Chemicals & SKC Polyurethanes Inc., urethane resin emulsion, polycarbonate-based polyurethane, having a polycarbonate-derived skeleton), Elastron E-37, H-3 (hereinabove, polyester-based polyurethane in which the main chain has a polyester-derived skeleton), Elastron H-38, BAP, C-52, F-29, W-11P (hereinabove, polyether-based polyurethane in which the main chain has a polyether-derived skeleton) (trade name, manufactured by DKS Co., Ltd., urethane resin emulsion), Superflex 870, 800, 150, 420, 460, 470, 610, 700 (trade name, manufactured by DKS Co., Ltd., urethane resin emulsion), Pamarin UA-150 (trade name, manufactured by Sanyo Chemical Industries, urethane resin emulsion), Sancure-2710 (trade name, manufactured by Lubrizol Japan Ltd., urethane resin emulsion), NeoRez R-9660, R-9637, R-940 (trade name, manufactured by Kusumoto Chemicals Ltd., urethane resin emulsion), Adecabon Titer HUX-380, 290K (trade name, manufactured by ADEKA Corporation, urethane resin emulsion).

In this invention, the content of the resin particles is equal to or more than 3% by mass with respect to a total mass of the solid content of the ink. In addition, an upper limit value of the content of the resin particle is preferably equal to or less than 20% by mass, more preferably equal to or less than 15% by mass and further more preferably equal to or less than 12% by mass of the solid content of the ink. when the content of the resin particle is within this range, the printed matter obtained has excellent color developing properties, clogging resistance and friction fastness.

In a pigment printing inkjet recording method as described below, the resin particles may also be included in a processing liquid in a case where a processing liquid is used. In this case, the resin particles included in the processing liquid and the resin particles included in the pigment printing ink jet ink composition may be the same or different.

In addition, the temperature in a heating step of the pigment printing ink jet recording method (to be described later) may be set such that at least a portion of the cross-linking groups are activated via heating to a de-protection temperature (i.e. a dissociation temperature) of the isocyanate group of the urethane-based resin comprising a cross-linking group.

### 2. 3. Organic Solvent

The pigment printing ink jet ink composition comprises an organic solvent. The presence of the organic solvent in the ink composition confers the properties of excellent clogging resistance at the time of recording, favorable dryness of the ink composition ejected on a recording medium and excellent color developing properties and friction fastness.

The organic solvent used in the pigment printing ink jet ink composition is preferably a water-miscible organic solvent. By using a water-miscible organic solvent, it is possible to obtain an image having improved dryness of the ink composition and excellent color developing properties and friction fastness.

In addition, the pigment printing ink jet ink composition according to this invention includes an alkyl amide compound (hereinafter, referred to as "specific amide compound") represented by the following general formula (1) as the organic solvent.

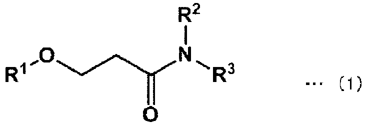

In the general formula (1), R¹ represents a straight chain or branched alkyl group having 1 to 6 carbon atoms and R² and R³ each independently represent hydrogen atoms or a straight chain or branched alkyl group having 1 to 4 carbon atoms.

In general formula (1), R¹ represents a straight chain or branched alkyl group having 1 to 6 carbon atoms. Examples of the straight chain or branched alkyl group having 1 to 6 carbon atoms include a methyl group, an ethyl group, a propyl group, a isopropyl group, an n-butyl group, a sec-butyl group, a isobutyl group, a tert-butyl group, a 2,2-dimethylpropyl group, a 3-methylbutyl group, a 1-methylbutyl group, a 1-ethylpropyl group, a 1,1-dimethylpropyl group and a hexyl group. A methyl group is preferable.

In the general formula (1), R² and R³ each independently represent hydrogen atoms or a straight chain or branched alkyl group having 1 to 4 carbon atoms. Examples of the straight chain or branched alkyl group having 1 to 4 carbon atoms include a methyl group, an ethyl group, a propyl group, an isopropyl group, an n-butyl group, a sec-butyl group, an isobutyl group and a tert-butyl group. Of these, a methyl group is preferable.

Examples of the alkylamide compound represented by the general formula (1) include 3-methoxy-N,N-dimethyl propionamide, 3-methoxy-N,N-diethyl propionamide, 3-methoxy-N,N-methylethyl propionamide, 3-ethoxy-N,N-dimethyl propionamide, 3-ethoxy-N,N-diethyl propionamide, 3-ethoxy-N,N-methylethyl propionamide, 3-n-butoxy-N,N-dimethyl propionamide, 3-n-butoxy-N,N-diethyl propionamide, 3-n-butoxy-N,N-methylethyl propionamide, 3-n-propoxy-N,N-dimethyl propionamide, 3-n-propoxy-N,N-diethyl propionamide, 3-n-propoxy-N,N-methylethyl propionamide, 3-isopropoxy-N,N-dimethyl propionamide, 3-isopropoxy-N,N-diethyl propionamide, 3-isopropoxy-N,N-methylethyl propionamide, 3-tert-butoxy-N,N-dimethyl propionamide, 3-tert-butoxy-N,N-diethyl propionamide and 3-tert-butoxy-N,N-methylethyl propionamide.

When the cloth is a polyester fabric, the presence of the specific amide compound in the pigment printing ink jet ink composition ensures that the ink is easily maintained on the surface and color development is favorable. It appears that this is because there is minimal flow of the ink between the fibres of the cloth and thus the ink is easily maintained on the surface. Since polyester fabrics have few hydrophilic groups, when they are used with aqueous inks known in the related art, the ink flows down between fibers and permeates into the cloth and thus it is difficult to obtain color development. However, in the pigment printing ink jet ink composition, it appears that the inclusion of the specific amide compound increases the affinity of the fibers of the polyester cloth with the ink such that permeation of the ink into the cloth is minimal.

When the pigment printing ink jet ink composition including the specific amide compound is used with cotton fabrics, color development is also favorable. It appears that this is because the excessive permeation and spreading of the ink into the fibers of the cloth is suppressed. Since cotton fabric has a large number of hydrophilic groups in the fibers and the fabric is dense, aqueous inks of the prior art permeate and spread into the fibers and it is difficult to obtain color developing properties. However, in the pigment printing ink jet ink composition, because of the presence of the specific amide compound, the affinity of the fibers of the cotton cloth with the ink is adjusted and it appears that excessive permeation of the ink into the fibers is suppressed.

In addition, in pigment printing, when resin particles are added to the ink for the purpose of improving fastness, the resin particles may form a film in the nozzle such that clogging occurs. Clogging can be suppressed by adding a resin dissolving solvent to dissolve the resin particles, but this resin dissolving solvent may remain in a recorded medium and thus dryness tends to deteriorate. However, in the pigment printing ink jet ink composition, the inclusion of the specific amide compound increases compatibility between the organic solvent and the resin particles and thus it is possible to improve dispersibility of the resin particles in the ink. Therefore, because the pigment printing ink jet ink composition includes the specific amide compound, it is possible to ensure increased resin solubility and favorable dryness favorable and to provide a pigment printing ink jet ink composition having excellent clogging resistance at the time of recording. In addition, when a urethane resin is used as the resin particles, it is possible increase friction fastness.

The content of the specific amide compound is preferably equal to or more than 30% by mass, more preferably equal to or more than 70% by mass, further more preferably equal to or more than 75% by mass and further more preferably equal to or more than 80% by mass, with respect to a total mass of the organic solvent included in the pigment printing ink jet ink composition. When the content of the specific amide compound is within the range, more favorable color development can be achieved with either cotton cloth or the polyester cloth and the pigment printing ink jet ink composition has excellent clogging resistance and dryness at the time of recording. In addition, the content of the specific amide compound is preferably equal to or less than 90% by mass and more preferably equal to or less than 86% by mass with respect to a total mass of the organic solvent included in the pigment printing inkjet ink composition. Setting the content of the specific amide compound to be within such a range ensures that the pigment printing ink jet ink composition has excellent clogging resistance at the time of recording.

In addition, the content of the specific amide compound is preferably equal to or more 18% by mass, with respect to a total mass of the pigment printing ink jet ink composition. In addition, the content of the specific amide compound is preferably equal to or less than 30% by mass, more preferably equal to or less than 25% by mass and still more preferably equal to or less than 22% by mass, with respect to the total mass of the pigment printing ink jet ink composition. When the content of the specific amide compound is within the range, more favorable color development can be achieved with either cotton cloth or polyester cloth and the pigment printing ink jet ink composition has excellent clogging resistance or dryness at the time of recording.

In addition, the mass ratio of the specific amide compound to the resin particles is preferably equal to or more than 1.5:1 and equal to or less than 20:1. The mass ratio of specific amide compound to resin particles is more preferably equal to or more than 2.0:1 and still more preferably equal to or more than 3.2:1. In addition, the mass ratio of specific amide compound to resin particles preferably equal to or less than 10:1 and further more preferably equal to or less than 6.0:1. By setting the content of the specific amide compound to be within this range, precipitation of the resin particles can be suppressed such that the pigment printing inkjet ink composition has excellent clogging resistance while favorable friction fastness is maintained.

Examples of organic solvents other than the specific amide compound which may be included in the pigment printing ink jet ink composition include polyols, glycol ethers and betaines.

Examples of polyols include polyol having 2 to 6 carbon atoms optionally one ether bond and the polyol is preferably a diol compound. Specific examples thereof include glycols such as 1,2-pentanediol, triethylene glycol monomethyl ether, triethylene glycol monobutyl ether, diethylene glycol monobutyl ether, dipropylene glycol monopropyl ether, glycerine, 1,2-hexanediol, 1,2-heptanediol, 1,3-propanediol, 1,2-butanediol, 1,3-butanediol, 1,4-butanediol, 2,3-butanediol, 2-methyl-3-phenoxy-1,2-propanediol, 3-(3-methylphenoxy)-1,2-propanediol, 3-hexyloxy-1,2-propanediol, 2-hydroxymethyl-2-phenoxymethyl-1,3-propanediol, 3-methyl-1,3-butanediol, 1,3-propanediol, 1,2-butanediol, 1,2-pentanediol, 1,4-butanediol, 1,5-pentanediol, 1,6-hexanediol, 2-methyl-2,4-pentanediol and 3-methyl-1,5-pentanediol.

Examples of glycol ethers include monoalkyl ethers of glycols selected from ethylene glycol, diethylene glycol, triethylene glycol, polyethylene glycol, propylene glycol, dipropylene glycol, tripropylene glycol, polypropylene glycol and polyoxyethylene polyoxypropylene glycol. More preferred examples thereof include triethylene glycol monomethyl ether, triethylene glycol monobutyl ether, dipropylene glycol monopropyl ether.

A betaine compound is a compound (intramolecular salt) having a positive charge and a negative charge at non-adjacent positions in the same molecule and having no overall charge, in which a dissociable hydrogen atom is not bonded to an atom having a positive charge. Preferred betaine compounds include N-alkyl substituted amino acids and a more preferred betaine compound include N-trialkyl substituted amino acids. Examples suitable betaine compounds include trimethyl glycine (referred to as "glycine betaine"), γ-butyrobetaine, homarine, trigonelline, carnitine, homoserine betaine, valine betaine, lysin betaine, ornithine betaine, alanine betaine, stachydrine and betaine glutamate, especially trimethyl glycine.

The organic solvent may also comprise a pyrrolidone derivative. Examples of suitable pyrrolidone derivatives include N-methyl-2-pyrrolidone, N-ethyl-2-pyrrolidone, N-vinyl-2-pyrrolidone, 2-pyrrolidone, N-butyl-2-pyrrolidone and 5-methyl-2-pyrrolidone.

A plurality of kinds of organic solvents may be used. The content of organic solvent is preferably chosen so as to obtain desired ink viscosity and surface tension and is preferably equal to or more than 5% by mass, more preferably equal to or more than 10% by mass and still more preferably equal to or more than 15% by mass, with respect to a total mass of the ink. In addition, the content of the organic solvent is preferably equal to or less than 35% by mass, more preferably equal to or less than 30% by mass and still more preferably equal to or less than 25% by mass, with respect to a total mass of the pigment printing ink jet ink composition.

### 2. 4. Water

The pigment printing inkjet ink composition includes water as a solvent. Water is a main solvent of the ink and is a component that evaporates and dispersed by drying. Examples of water include water obtained by removing ionic impurities as much as possible, that is, pure water such as ion exchanged water, ultrafiltration water, reverse osmotic water and distilled water; and super pure water. In addition, if water obtained by sterilization by ultraviolet ray emission or addition of hydrogen peroxide is used, it is possible to prevent generation of mold or bacteria when the ink is stored for a long period of time.

The content of water included in the pigment printing ink jet ink composition can be equal to or more than 50% by mass, equal to or more than 60% by mass or equal to or more than 70% by mass, with respect to a total mass of the ink. In addition, the upper limit of the content of water included in the ink can be equal to or less than 95% by mass, equal to or less than 90% by mass or equal to or less than 80% by mass.

### 2. 5. Surfactant

The pigment printing inkjet ink composition may comprise a surfactant. The surfactant has the function of lowering surface tension of the ink composition, improving wettability to the cloth. The surfactant easily adjusts the ink viscosity and the surface tension to be desired ink viscosity and surface tension required in the ink jet pigment printing method.

Preferred surfactants include acetylene glycol-based surfactants, acetylene alcohol-based surfactants, silicone-based surfactants and fluorine-based surfactants. Silicone-based surfactant and the fluorine-based surfactant are preferred from a viewpoint of easily adjusting the surface tension of the ink composition as desired.

The acetylene glycol-based surfactant includes Safinol 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, DF110D (hereinabove, trade name, manufactured by Air Products and Chemicals. Inc.), Orfin B, Y, P, A, STG, SPC, E1004, E1010, PD-001, PD-002W, PD-003, PD-004, EXP. 4001, EXP. 4036, EXP. 4051, AF-103, AF-104, AK-02, SK-14, AE-3 (hereinabove, trade name, manufactured by Nissin Chemical Co., Ltd.) and Acetylenol E00, E00P, E40, E100 (hereinabove, trade name, manufactured by Kawaken Fine Chemicals Co., Ltd.).

The silicone-based surfactant may include a polysiloxane-based compounds. The polysiloxane-based compound and examples thereof include polyether-modified organosiloxanes. Examples of commercially available polyether-modified organosiloxanes include BYK-306, BYK-307, BYK-333, BYK-341, BYK-345, BYK-346, BYK-348 (hereinabove, trade name, manufactured by BYK Japan), KF-351A, KF-352A, KF-353, KF-354L, KF-355A, KF-615A, KF-945, KF-640, KF-642, KF-643, KF-6020, X-22-4515, KF-6011, KF-6012, KF-6015 and KF-6017 (hereinabove, trade name, manufactured by Shin-Etsu Chemical Co., Ltd.).

The fluorine-based surfactant is preferably a fluorine-modified polymer and specific examples thereof include BYK-340 (manufactured by BYK Japan).

The content of surfactant is preferably equal to or more than 0.1% by mass, more preferably equal to or more than 0.3% by mass and still more preferably equal to or more than 0.5% by mass, with respect to a total mass of the ink. In addition, the content of the surfactant is preferably equal to or less than 10% by mass, more preferably equal to or less than 7% by mass, still more preferably equal to or less than 5% by mass, particularly preferably equal to or less than 2% by mass and still more particularly preferably equal to or less than 1% by mass, with respect to the total mass of the ink. 2. 6. Inorganic Alkali Compound

The pigment printing inkjet ink composition preferably includes an inorganic alkali compound (inorganic base compound). The inorganic alkali compound has the property of enhancing the pH of the pigment printing ink jet ink composition. In addition, the inorganic alkali compound enhances dispersion stability of the resin particles and thus has a function of improving re-dispersibility of the resin particles.

Examples of suitable inorganic alkali compounds include hydroxides of alkali metals or alkaline earth metal, carbonates of alkali metals or alkaline earth metals and phosphates of alkali metals or alkaline earth metal.

Examples of alkali metal hydroxides include lithium hydroxide, sodium hydroxide and potassium hydroxide. Examples of alkaline earth metal hydroxides include calcium hydroxide and magnesium hydroxide.

Examples of alkali metal carbonates include lithium carbonate, lithium hydrogen carbonate, potassium carbonate, potassium hydrogen carbonate, sodium carbonate and sodium hydrogen carbonate. Examples of alkaline earth metal carbonates include calcium carbonate.

Examples of alkali metal phosphates include lithium phosphate, potassium phosphate, potassium dihydrogen phosphate, trisodium phosphate and disodium hydrogen phosphate. Examples of alkaline earth metal phosphates include calcium phosphate and calcium hydrogen phosphate.

One or a plurality of inorganic alkali compounds may be used in the pigment printing ink jet ink composition. The total content of the inorganic alkali compounds is preferably equal to or more than 0.01% by mass and equal to or less than 0.8% by mass, more preferably equal to or more than 0.02% by mass and equal to or less than 0.6% by mass and still more preferably equal to or more than 0.03% by mass and equal to or less than 0.4% by mass, with respect to a total mass of the pigment printing ink jet ink composition.

If of the total amount of inorganic alkali compounds is within the above range, it is possible to sufficiently enhance a pH of the pigment printing ink jet ink composition such that re-dispersibility of the resin particle is improved since the dispersion stability of the resin particles is enhanced.

### 2. 7. Other Components

The pigment printing inkjet ink composition may include a pH adjusting agent, a preservative/anti-mold agent, a rust preventive agent, a chelating agent, a viscosity adjusting agent, a solubilizing aid and an anti-oxidant, depending on the necessity. pH Adjusting Agent

In addition to the inorganic alkali compounds, examples of the pH adjusting agent include amines having a standard boiling point of 200°C or more at 25°C, for example morpholines, piperazines, diethanolamine, triethanolamine and triisopropanolamine. Among these, amines having a standard boiling point of 200°C or more at 25°C are preferred. When a high boiling point amine of this type is included, it is possible to suppress clogging of the head at a temperature of the heating step in the pigment printing ink jet recording method.

### Preservative/Anti-Mold Agent

Examples of preservative/anti-mold agents include sodium benzoate, pentachlorophenol sodium, 2-piridinethiol-1-oxide sodium, sorbic acid sodium, sodium dehydroacetate, 1,2-dibenzoisothiazolin-3-on (Proxel CRL, Proxel BND, Proxel GXL, Proxel XL-2, Proxel TN of ICI Corporation).

### Chelating Agent

The chelating agent has the property of capturing ions. Examples of suitable chelating agents include ethylenediamine tetraacetic acid (EDTA) and salts thereof, for example a nitrilotriacetic acid salt of ethylenediamine; hexametaphosphate salts; pyrophosphate salts; and metaphosphate salts.

### 2. 8. Method of Preparing Pigment Printing Ink Jet Ink Composition

The pigment printing inkjet ink composition is obtained by mixing the above-described components with one another in any order and removing impurities by performing filtration depending on the necessity. Suitably, the process is carried out at room temperature. The mixing step suitably comprises stirring and mixing by sequentially adding materials to a container with a stirring device such as mechanical stirrer and magnetic stirrer. Suitable filtration methods include centrifugal filtration and filter filtration, depending on the necessity.

### 2. 9. Physical Properties of Pigment Printing Ink Jet Ink Composition

The pigment printing inkjet ink composition is applied to the cloth by an ink jet method. For this reason, from a viewpoint of the balance between recording quality and reliability as an ink for ink jet recording, surface tension at 25°C of the pigment printing ink jet ink composition is preferably equal to or more than 10 mN/m and equal to or less than 40 mN/m and more preferably equal to or more than 25 mN/m and equal to or less than 40 mN/m. The surface tension can be measured by checking the surface tension when a platinum plate is wetted with an ink in an environment of 25°C, using an automatic surface tension meter CBVP-Z (trade name, manufactured by Kyowa Interface Science Co., Ltd.), for example.

In addition, for the same reasons, the viscosity at 20°C of the pigment printing ink jet ink composition is preferably equal to or more than 2 mPa·s and equal to or less than 15 mPa·s, more preferably equal to or more than 2 mPa·s and equal to or less than 5 mPa·s and still more preferably equal to or more than 2 mPa·s and equal to or less than 3.6 mPa·s. The viscosity can be measured by measuring a viscosity in an environment of 20°C using a viscoelastic tester MCR-300 (trade name, manufactured by Pysica Corporation), for example.

### 2. 10. Operation/Effect

As described above, because the pigment printing ink jet ink composition includes the specific amide compound, the pigment printing ink jet ink composition has excellent color developing properties with respect to various fabrics such as polyester cloth and cotton cloth. In addition, because the ink includes the specific amide compound, the pigment printing ink jet ink composition has excellent dryness and clogging resistance at the time of recording. In addition, when a urethane resin is used as the resin particle, it is possible to obtain favorable friction fastness.

### 3. Processing Liquid Composition

In order to further improve color developing properties and to obtain a printed matter having excellent friction fastness, a processing liquid composition is preferably used.

The processing liquid composition aggregates components of the ink composition and is preferably used in a pigment printing ink jet recording method performed by attaching the pigment printing ink jet ink composition onto a cloth by an ink jet method. It is preferred that the processing liquid composition does not contain a coloring agent such as a pigment or a dye. Hereinafter, the processing liquid composition will be described.

### 3. 1. Aggregating Agent

Examples of the aggregating agent included in a processing liquid composition include a cationic compound such as a polyvalent metal salt, organic acid, cationic resin or cationic surfactant. One of these aggregating agents may be used alone, or two or more thereof may be used in combination. It is preferred that the processing liquid comprises at least one aggregating agent selected from the polyvalent metal salt and the organic acid as this gives excellent reactivity with the pigment or resin particle included in the ink composition. More preferably, the aggregating agent is a polyvalent metal salt.

The polyvalent metal salt includes a divalent or higher polyvalent metal ion and a negative ion bonded to the polyvalent metal ion and is a compound soluble in water. Specific examples of polyvalent metal ions include divalent metal ions such as Ca²⁺, Cu²⁺, Ni²⁺, Mg²⁺, Zn²⁺ and Ba²⁺; and trivalent metal ions such as Al³⁺, Fe³⁺ and Cr³⁺. Examples of the negative ion include Cl⁻, I⁻, Br⁻, So₄²⁻, ClO³⁻, NO³⁻, HCOO⁻ and CH3COO⁻. Among these polyvalent metal salts, calcium and magnesium salts are preferable from a viewpoint of stability of the processing liquid and reactivity as an aggregating agent, particularly calcium nitrate and calcium chloride.

Examples of the organic acid include sulfuric acid, hydrochloric acid, nitric acid, phosphoric acid, polyacrylic acid, an acetic acid, glycolic acid, malonic acid, malic acid, maleic acid, an ascorbic acid, succinic acid, glutaric acid, fumaric acid, citric acid, tartaric acid, lactic acid, sulfonic acid, an orthophosphoric acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid and derivatives or salts thereof. One organic acid may be used alone, or two or more thereof may be used in combination.

Examples of the cationic resin include a cationic urethane resin, a cationic olefin resin, a cationic allylamine resin.

Known cationic urethane resins can be appropriately selected and used. The cationic urethane resin may be a commercially available product for example Hydran CP-7010, CP-7020, CP-7030, CP-7040, CP-7050, CP-7060, CP-7610 (trade name, manufactured by DIC Corporation), Superflex 600, 610, 620, 630, 640, 650 (trade name, manufactured by DKS Co., Ltd.), urethane emulsion WBR-2120C, WBR-2122C (trade name, manufactured byTaisei Fine Chemical Co., Ltd.).

The cationic olefin resin includes units derived from an olefin monomer such as ethylene and propylene in the structural skeleton and a known cationic olefin resin can be appropriately selected and used. The cationic olefin resin may be in an emulsion state dispersed in a solvent comprising water and/or an organic solvent. As the cationic olefin resin, a commercially available product can be used and examples thereof include ARROWBASE CB-1200, CD-1200 (trade name, manufactured by Unitika Ltd.).

A known cationic allylamine resin can be appropriately selected and used. Examples of cationic allylamines include a polyallylamine hydrochloride, a polyallylamine amide sulfate, an allylamine hydrochloride/diallylamine hydrochloride copolymer, an allylamine acetate/diallylamine acetate copolymer, an allylamine acetate/diallylamine acetate copolymer, an allylamine hydrochloride/dimethylallylamine hydrochloride copolymer, an allylamine/dimethylallylamine copolymer, a polydiallylamine hydrochloride, a polymethyl diallylamine hydrochloride, a polymethyl diallylamine amidosulfate, a polymethyl diallylamine acetate, a polydiallyl dimethylammonium chloride, a diallylamine acetate/sulfur dioxide copolymer, a diallylmethylethyl ammonium ethylsulfide/sulfur dioxide copolymer, a methyldiallylamine chloride/sulfur dioxide copolymer, a diallyldimethyl ammonium chloride/sulfur dioxide copolymer and a diallyldimethyl ammonium chloride/acrylamide copolymer. A commercially available cationic allylamine resin can be used and examples thereof include PAA-HCL-01, PAA-HCL-03, PAA-HCL-05, PAA-HCL-3L, PAA-HCL-10L, PAA-H-HCL, PAA-SA, PAA-01, PAA-03, PAA-05, PAA-08, PAA-15, PAA-15C, PAA-25, PAA-H-10C, PAA-D11-HCL, PAA-D41-HCL, PAA-D19-HCL, PAS-21CL, PAS-M-1L, PAS-M-1, PAS-22SA, PAS-M-1A, PAS-H-1L, PAS-H-5L, PAS-H-10L, PAS-92, PAS-92A, PAS-J-81L, PAS-J-81 (trade name, manufactured by Nittobo Medical Co., Ltd.), Hymo Neo-600, Hymoloc Q-101, Q-311, Q-501, Hymax SC-505 and SC-505 (trade name, manufactured by Hymo Corporation).

Examples of cationic surfactants include: primary, secondary, and tertiary amine salt type, alkylamine salts, dialkylamine salts, aliphatic amine salts, benzalkonium salts, quaternary ammonium salts, quaternary alkyl ammonium salts, alkylpyridinium salts, sulfonium salts, phosphonium salts, onium salts and imidazolinium salts. Specific examples of cationic surfactants include laurylamine, coconut amine rosin amine and dihydroxy ethyl laurylamine, salts such as lauryl trimethyl ammonium chloride, cetyl trimethyl ammonium chloride, benzyl tributyl ammonium chloride, benzalkonium chloride, dimethyletyl lauryl ammonium ethyl sulfate, dimethylethyl octyl ammonium ethyl sulfate, trimethyl lauryl ammonium chloride, cetyl pyridinium chloride, cetyl pyridinium bromide, decyl dimethyl benzyl ammonium chloride, dodecyl dimethyl benzyl ammonium chloride, tetradecyl dimethyl ammonium chloride, hexadecyl dimethyl ammonium chloride and octadecyl dimethyl ammonium chloride.

The content of the aggregating agent may be equal to or more than 0.1% by mass and equal to or less than 25% by mass, equal to or more than 0.2% by mass and equal to or less than 20% by mass or equal to or more than 0.3% by mass and equal to or less than 10% by mass, with respect to the total mass of the processing liquid. In addition, the concentration of the aggregating agent may be equal to or more than 0.03 mol/kg in 1 kg of the processing liquid. Preferably, the concentration of the aggregating agent may be equal to or more than 0.1 mol/kg and equal to or less than 1.5 mol/kg or equal to or more than 0.2 mol/kg and equal to or less than 0.9 mol/kg, in 1 kg of the processing liquid.

### 3. 2. Water

The processing liquid used preferably has water as a main solvent. The water is a component that evaporates and disperses by drying after the processing liquid is attached to a recording medium. The water used in the processing liquid is the same as that use in the ink composition described above and therefore will not be described further. The content of water in the processing liquid can be equal to or more than 50% by mass, preferably equal to or more than 60% by mass, more preferably equal to or more than 70% by mass and still more preferably equal to or more than 80% by mass, with respect to the total mass of the processing liquid.

### 3. 3. Water-Soluble Organic Solvent

The processing liquid used in this invention may additionally comprise a water-miscible organic solvent. By adding the water-miscible organic solvent, it is possible to improve the wettability of the processing liquid with respect to a recording medium. The water-soluble organic solvents suitable for use in the processing liquid are the same as those described above for the ink composition and will therefore not be described further. The content of the water-soluble organic solvent is not particularly limited, but can be equal to or more than 1% by mass and equal to or less than 40% by mass, with respect to a total mass of the processing liquid.

### 3. 4. Surfactant

The processing liquid used may comprise a surfactant. By adding the surfactant, it is possible to decrease the surface tension of the processing liquid and to improve wettability of the recording medium. Preferred surfactants include acetylene glycol-based surfactants, silicone-based surfactants and fluorine-based surfactants. Specific examples of surfactants are as described above for the ink composition. The content of the surfactant can be equal to or more than 0.1% by mass and equal to or less than 1.5% by mass, with respect to the total mass of the processing liquid.

### 3. 5. Resin Particle

The processing liquid used may comprise resin particles, for example a resin emulsion, for the purpose of improving the friction fastness and suppressing fluffing of the cloth. In addition, when resin particles are included, color developing properties are improved. The resin particles are suitably the same as described above for the ink and a commercially available product can be used. Examples of commercially available urethane resins include Superflex 500, 6E-2000, E-2500, E-4000, R-5000 (trade name, manufactured by DKS Co., Ltd.) and Adecabon Titer HUX-822, 830 (trade name, manufactured by ADEKA Corporation). Examples of vinyl acetate resins include Vinyblan 1245L, 2680, 2682 and 2684 (trade name, manufactured by Nissan Chemical Industry Co., Ltd.). Examples of acrylic resins include Bonkote AN-402, R-3310 and R-3360 (trade name, manufactured by DIC Corporation). Examples of styrene acrylic resins include Mowinyl 966A (trade name, manufactured by Nippon Synthetic Chemical Industry Co., Ltd.).

The lower limit of the content of the resin particles in the processing liquid is preferably equal to or more than 1% by mass, more preferably equal to or more than 3% by mass and still more preferably equal to or more than 5% by mass, with respect to a total mass of the processing liquid composition. In addition, the upper limit of the content of the resin particles is preferably equal to or less than 12% by mass, more preferably equal to or less than 10% by mass and still more preferably equal to or less than 8% by mass, with respect to the total mass of the processing liquid composition. when the content of the resin particle in the processing liquid is within this range, it is possible to further improve color developing properties and friction fastness and to suppress fluffing of the cloth.

The resin particle is preferably a non-ionic or cationic resin particle. When the resin particle is a non-ionic resin particle, a printed matter with excellent color developing properties is obtained, particularly in printing with respect to a cotton cloth. When the resin particle is a cationic resin particle, a printed matter with excellent color developing properties is obtained, particularly in printing with respect to a polyester cloth.

### 3. 6. Other Components

The processing liquid used may further comprise a pH adjusting agent, a preservative, an anti-mold agent, a rust preventive agent and a chelating agent. As these other components, the same components described above for the ink composition can be used.

### 3. 7. Method of Preparing Processing Liquid

The processing liquid used can be prepared by dispersing/mixing each of the components by an appropriate method. The dispersing/mixing is suitably carried out at room temperature. After sufficiently stirring each of the components, filtration is performed in order to remove coarse particles and foreign matter that cause closing and thus a targeted processing liquid can be obtained.

### 3. 8. Physical Properties of Processing Liquid

When the processing liquid used is intended to be ejected from an ink jet recording head, the surface tension at 20°C is preferably equal to or more than 20 mN/m and equal to 40 mN/m and more preferably equal to or more than 20 mN/m and equal to or less than 35 mN/m. The surface tension can be measured by checking the surface tension when a platinum plate is wetted with an ink in an environment of 20°C, using an automatic surface tension meter CBVP-Z (trade name, manufactured by Kyowa Interface Science Co., Ltd.).

In addition, from the same viewpoint, the viscosity at 20°C of the processing liquid used is preferably equal to or more than 3 mPa·s and equal to or less than 10 mPa·s and more preferably equal to or more than 3 mPa·s and equal to or less than 8 mPa·s. The viscosity can be measured by measuring a viscosity in an environment of 20°C using a viscoelastic tester MCR-300 (trade name, manufactured by Pysica Corporation).

### 4. Cloth

The pigment printing inkjet recording method is performed on cloth. The textile constituting the cloth and examples thereof include natural fibers such as cotton, hemp, wool and silk, synthetic fibers such as polypropylene, polyester, acetate, triacetate, polyamide and polyurethane; and biodegradable fibers such as polylactic acid. The textile constituting the cloth may be a blend of these fibers. The cloth may be obtained by making the above-exemplified fibers into any form of woven fabric, a knit fabric or a non-woven fabric. In addition, the weight of the cloth used is equal to or more than 1.0 oz (ounce)(28.35 g) (preferably per square yard) and equal to or less than 10.0 oz (283.50 g), preferably equal to or more than 2.0 oz (56.70 g) and equal to or less than 9.0 oz (255.25 g), more preferably equal to or more than 3.0 oz (85.05 g) and equal to or less than 8.0 oz (226.80 g) and still more preferably equal to or more than 4.0 oz (113.40 g) and equal to or less than 7.0 oz (198.45 g). If the weight of the cloth is in such a range, it is possible to perform favorable recording. In addition, the pigment printing ink jet recording method is applicable to a plurality of kinds of cloths having different weights and it is possible to perform favorable recording.

The cloth can be a polyester fabric made of polyester or polyester blended yarn. Examples of such a cloth include a polyester fabric and a polyester blended fabric. Examples of polyester blended fabrics include fabrics in which polyester is blended by equal to or more than 20% by mass, preferably by equal to or more than 50% by mass and more preferably by equal to or more than 70% by mass and other blended fibers including cotton. Such a polyester fabric is excellent from a viewpoint that moisture such as sweat is easily dried, but on the other hand, the ink does not infiltrate therein and deeply falls inside. With respect to this, as the ink includes a specific amide compound, affinity of the ink with the fibers becomes high and the ink is easily maintained on the upper surface of the fabric. As a result, it is possible to obtain excellent color developing properties even in the polyester fabrics in which the ink usually easily sinks downwards into the cloth.

In addition, in this embodiment, the cloth can be a cotton fabric. The cotton fabrics have a lot of hydrophilic groups in the fibers and since the fibers are densely packed, the ink penetrates into the cloth and easily spreads. Because the ink includes the specific amide compound, the affinity of the ink with the fiber becomes more favorable, spreading of the ink is suppressed and penetration of the ink into the cloth is suppressed. Therefore, the ink stays on an upper layer in the cloth and excessive spreading of the ink in a longitudinal direction can be suppressed and color developing properties can be excellent.

### 5. Pigment Printing Ink Jet Recording Method

The pigment printing inkjet recording method according to this invention will be described by each process step. The pigment printing ink jet recording method according to this invention is a method including a step of ejecting the pigment printing ink jet ink composition according to this invention from an ink jet nozzle and attaching the composition onto the cloth.

### 5.1. Processing Liquid Composition Attaching Step

In the pigment printing ink jet recording method, in order to improve color development of a printed matter, it is preferable to include a processing liquid composition attaching step in which the processing liquid composition is attached to the cloth before the step of attaching the ink onto the cloth.

An attached amount of the processing liquid composition is preferably equal to or more than 0.02 g/cm² and equal to or less than 0.5 g/cm² and more preferably equal to or more than 0.02 g/cm² and equal to or less than 0.24 g/cm². When the attached amount of the processing liquid composition is within the range, it is easy to uniformly apply the processing liquid composition to the cloth and it is possible to suppress aggregation irregularity of an image and to enhance color development.

In the processing liquid composition attaching step, when the processing liquid composition includes a polyvalent metal salt, the attached amount of the polyvalent metal salt included in the processing liquid composition attached to the cloth is preferably equal to or more than 1.6 µmol/cm² and equal to or less than 6 µmol/cm² and more preferably equal to or more than 2 µmol/cm² and equal to or less than 5 µmol/cm². When the attached amount of the polyvalent metal salt is equal to or more than 1.6 µmol/cm², color developing properties of the recorded image improve. In addition, when the attachment amount of the polyvalent metal salt is equal to or less than 6 µmol/cm², color developing properties and friction fastness of the recorded image improve.

Examples of methods for attaching the processing liquid composition to the cloth include:
immersing a cloth in a processing liquid composition (immersion application);
applying a processing liquid composition with a roll cutter (roller application);
emitting a processing liquid composition using a spray device (spray application);
emitting a processing liquid composition by an ink jet method (ink jet application)
and any of the method may be used. When ink jet printing is performed using the printer 1 shown in Figure, it is preferable that the processing liquid composition be attached onto the cloth M by ink jet application from the ink jet head 2. If the processing liquid composition attaching step is performed by ink jet application, it is possible to further uniformly attach the processing liquid composition onto the cloth M.

The pigment printing ink jet recording method may include a processing liquid composition drying step comprising drying the processing liquid composition attached onto the cloth after the processing liquid composition attaching step. The drying of the processing liquid composition may be performed by natural drying but from a viewpoint of improving a drying speed, drying is preferably performed by heating. When the drying step of the processing liquid composition is performed by heating, the heating method includes a heat press method, an atmospheric steam method, a high-pressure steam method, a thermofix method. In addition, examples of the heat source of heating include infrared rays (lamp).

### 5. 2. Ink Composition Attaching Step

An ink composition attaching step is a step in which the pigment printing ink jet ink composition is ejected from an ink jet nozzle and attached to at least a region of the cloth to which the processing liquid composition has been attached by the processing liquid composition attaching step. The ink composition attaching step provides an image having excellent color developing properties.

When the pigment printing ink jet ink composition is attached onto the cloth, the ink may be attached such that it overlaps at least a portion of the region in which a processing liquid is attached. Specifically, the ink is preferably attached such that it overlaps 50% or more of the region in which at the processing liquid is attached, more preferably attached such that it overlaps 60% or more of the region to which the processing liquid is attached and still more preferably attached such that it overlaps 70% or more of the region to which the processing liquid is attached. By attaching the ink in such a manner, it is possible to obtain an image with excellent color developing properties.

In the ink composition attaching step, the lower limit of the attached amount of the pigment printing ink composition to the cloth is preferably equal to or more than 10 mg/inch² (1.55 mg/cm²), more preferably equal to or more than 50 mg/inch²(7.75 mg/cm²) and further more preferably equal to or more than 80 mg/inch²(12.4 mg/cm²). An upper limit thereof is preferably equal to or less than 200 mg/inch² (31.00 mg/cm²), more preferably equal to or less than 150 mg/inch² (23.25 mg/cm²) and further more preferably 100 mg/inch² (15.5 mg/cm²). When the attachment amount of the ink composition is within the range, an image excellent in color developing properties is easily prepared and the drying speed also can become favorable.

### 5. 3. Heating Step

The pigment printing ink jet recording method preferably includes a step of heating the cloth during the ink composition attaching step. If the cloth is heated during the ink composition attaching step, the temperature of the ink is increased, the viscosity and the surface tension are decreased and therefore the ink easily uniformly spreads to the cloth and easily permeates. In addition, since permeation of the ink is controlled by the specific amide compound included in the ink composition, the ink uniformly spreads on the cloth surface. Therefore, the ink is easily fixed to the cloth and the obtained recorded matter has improved color developing properties and leveling properties as well as excellent friction fastness. In addition, by attaching the ink composition onto the heated cloth, it is possible to improve drying properties of the ink, to shorten the drying time and to reduce or prevent damage to the cloth.

Examples of methods for heating the ink composition applied to the cloth include a heating mechanism 6 shown in Figure. Examples of the heating mechanism include a heat press method, an atmospheric pressure steam method, a high-pressure steam method, a hot air drying method, a thermofix method, in addition to the mechanism.

In the heating step, the surface temperature of the heated cloth is preferably equal to or more than 35°C and equal to or less than 65°C. When the surface temperature of the cloth surface is within this range, damage to the ink jet head and the cloth can be decreased and the ink uniformly spreads onto the cloth and easily permeates. The heating temperature in this heating step is the temperature of the surface of the heated cloth and can be measured by using a non-contact thermometer (trade name "IT2-80", manufactured by Keyence Corporation), for example. The surface temperature of the heated cloth is preferably equal to or more than 40°C and more preferably equal to or more than 45°C. In addition, an upper limit value of the surface temperature is preferably equal to or less than 60°C and more preferably equal to or less than 55°C.

During the heating time, the cloth surface is within the above temperature range. For example, the heating time can be equal to or more than 5 seconds and equal to or less than 1 minute and preferably equal to or more than 10 seconds and equal to or less than 30 seconds. When the heating time is within the range, it is possible to sufficiently heat the cloth while reducing damage to the ink jet head and the cloth.

In addition to this heating step, as described using the Figure, there may be included a step of providing a second heating mechanism downstream in a transporting direction of the cloth M and heating or drying the cloth M after the ink composition attaching step. In this case, the second heating mechanism is provided in a transporting direction of the cloth M downstream from the heating mechanism 6 of the Figure. Using the second heating mechanism, it is possible to improve drying properties of liquid droplets of the ink attached onto the cloth M. As the second heating mechanism, for example, any mechanism described in the heating mechanism 6 such as a dryer can be used.

The heating temperature in this case is preferably equal to or more than 100°C and equal to or less than 200°C. When the cloth is cotton, the heating temperature is preferably equal to or more than 110°C and equal to or less than 175°C, more preferably equal to or more than 120°C and equal to or less than 170°C and still more preferably equal to or more than 120°C and equal to or less than 165°C. When the cloth is polyester or polyester-blended yarn, the heating temperature is preferably equal to or more than 100°C and equal to or less than 170°C, more preferably equal to or more than 100°C and equal to or less than 165°C and still more preferably equal to or more than 100°C and equal to or less than 140°C. When the heating temperature is within this range, it is possible to reduce damage to the cloth and/or to promote film formation of the resin particles included in the ink composition. In addition, the heating time can be equal to or more than 30 seconds and equal to or less than 20 minutes, preferably equal to or more than 2 minutes and equal to or less than 7 minutes and more preferably equal to or more than 3 minutes and equal to or less than 5 minutes. When the heating time is within the range, it is possible to sufficiently dry the ink while reducing damage to the cloth.

### 5. 4. Operation/Effect

As described above, the pigment printing ink jet recording method uses the pigment printing ink jet ink composition comprising the specific amide compound. Therefore, using the pigment printing ink jet recording method with fabrics such as polyester and cotton, the ink is suppressed from permeating into the cloth and thus it is possible to obtain excellent color developing properties. In addition, as the pigment printing ink jet ink composition includes the specific amide compound, it is possible to obtain clogging resistance at the time of recording. In addition, when a urethane resin is used as the resin particles, it is possible to make friction fastness more favorable.

### 6. Examples and Comparative Examples

Hereafter, further specific examples are disclosed.

### 6. 1. Preparation of Ink Composition

Each component was put in a container so as to obtain a composition described in Tables 1-1 and 1-2, mixed and stirred for 2 hours at room temperature using a magnetic stirrer and sufficiently mixed by performing dispersion treatment using a beads mill filled with zirconia beads having a diameter of 0.3 mm. After stirring for 1 hour, filtration was performed by using a 5-µm membrane filter made of PTFE to obtain each ink composition. The numerical values in Tables 1-1 and 1-2 represent % by mass and pure water (ion exchange water) was added such that mass of each printing ink jet ink composition becomes 100% by mass. Here, in Tables 1-1 and 1-2, "amide compound content in organic solvent" represents amide compound content as a percentage (%) of the total amount of organic solvent.

The pigment used was a liquid pigment dispersion prepared by the following method.

### Preparation of Liquid Pigment Dispersion

65 parts of the pigment described in Tables 1-1 and 1-2, 35 parts of Joncryl 611 (trade name: manufactured by BASF Japan) which is a styrene-acrylic acid-based dispersion resin, 1.70 parts of potassium hydroxide and 250 parts of super pure water purified by an ion exchange method and a reverse osmosis method were mixed with one another, dispersion was performed for 10 hours by using a ball mill made of zirconia beads, coarse particles were removed by filtration using a glass fiber filter GA-100 (trade name: manufactured by Advantec Corporation) and adjustment was performed such that a pigment solid concentration was 15% by mass. The numerical value in Tables 1-1 and 1-2 represents the pigment solid concentration in the ink composition.

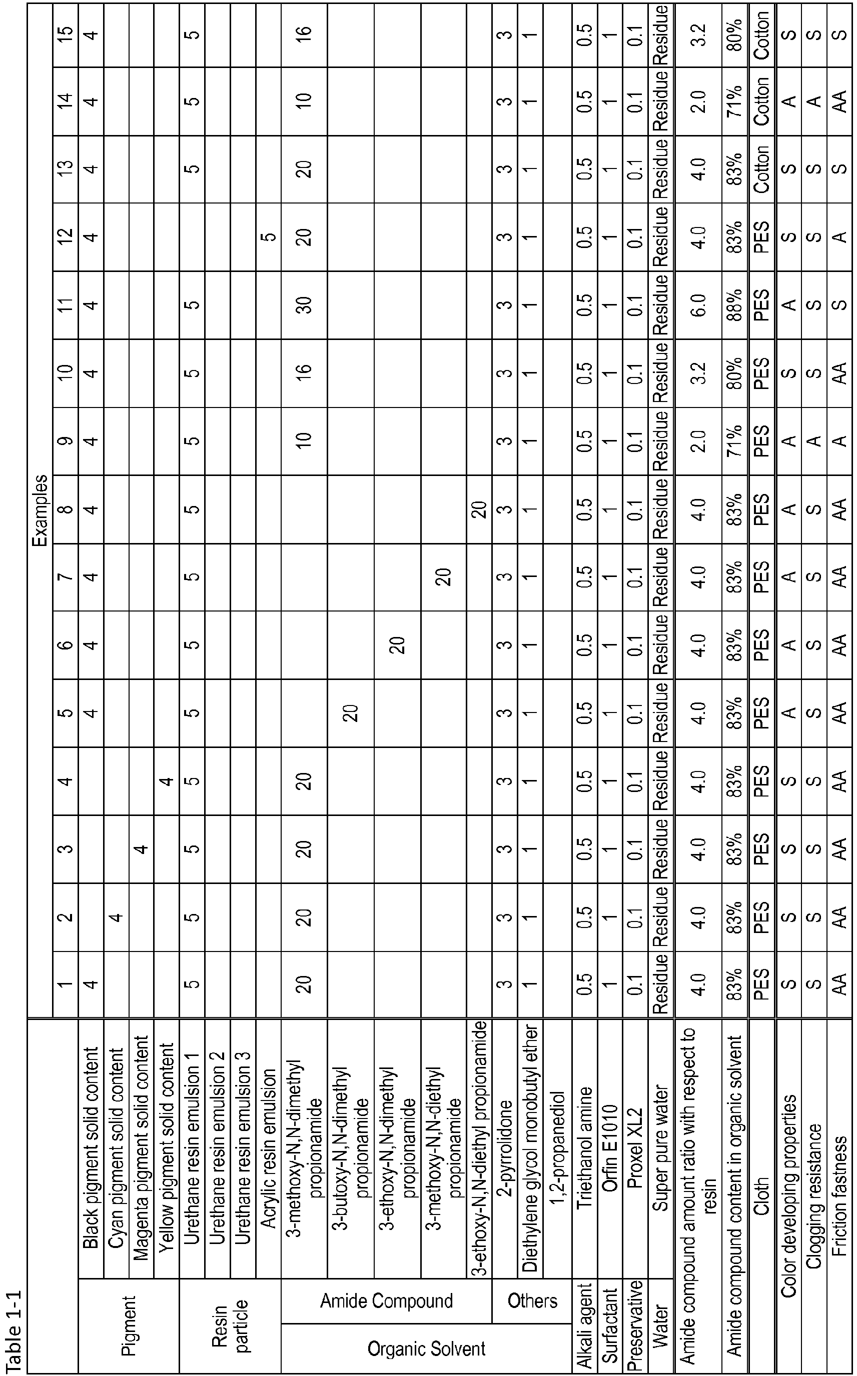

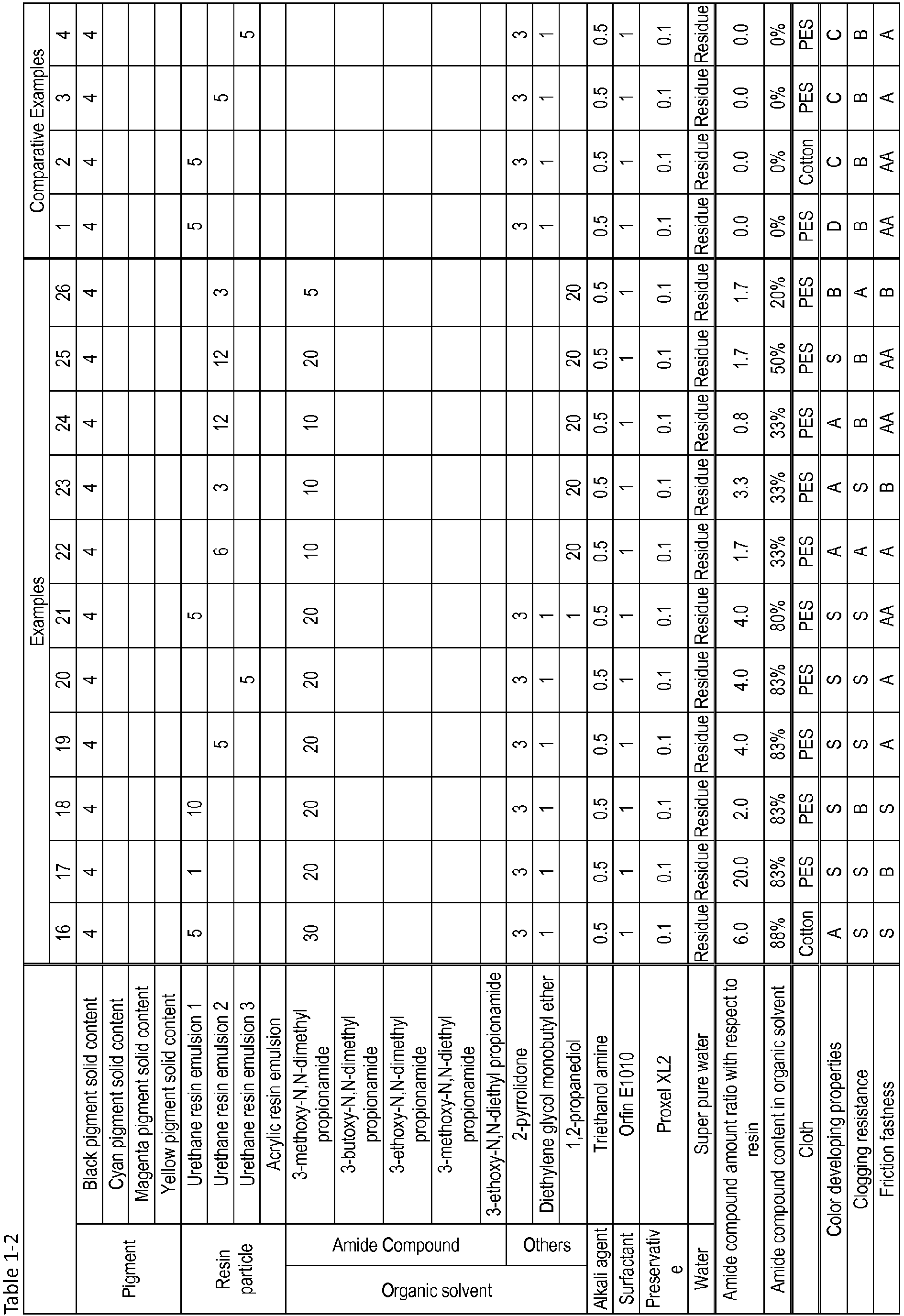

In Tables 1-1 and 1-2, details of the components described other than compound names are as follows.

### Pigment

• Black pigment: Carbon black
• Cyan pigment: C.I. pigment blue 15:3
• Magenta pigment: C.I. pigment red 122
• Yellow pigment: C.I. pigment yellow 74

### Resin Particle

• Urethane resin emulsion 1: Takelac WS-5100 (trade name, manufactured by Mitsui Chemicals & SKC Polyurethanes Inc., polycarbonate-based urethane resin including a cross-linking group, the numerical value in the table is a solid content of the urethane resin.)
• Urethane resin emulsion 2: Hydran WLS-213 (trade name, manufactured by DIC Corporation, polycarbonate-based urethane resin not including a cross-linking group, the numerical value in the table is a solid content of the urethane resin.)
• Urethane resin emulsion 3: Takelac WS-4022 (trade name, manufactured by Mitsui Chemicals, polyester-based urethane resin, the numerical value in the table is a solid content of the urethane resin.)
• Acrylic resin emulsion: Vinyblan 2682 (trade name, manufactured by Nissan Chemical Industry Co., Ltd., acrylic resin emulsion, the numerical value in the table is a solid content of the acrylic resin.)

### Surfactant

• Orfin E1010 (trade name, manufactured by Nippon Chemical Industries, acetylene glycol-based surfactant)

### Preservative

• Proxel XL2 (trade name, manufactured by Avecia Corporation)

### 6. 2. Preparation of Printed Matter

### 6. 2. 1. Preparation of Pre-treatment Liquid

16.0% by mass of calcium nitrate tetrahydrate (Ca: 17%), 2.7% by mass of fixing resin (trade name "Mowinyl 966A", manufactured by Nippon Synthetic Chemical Industry Co., Ltd.) (solid content) and 0.2% by mass of surfactant (trade name "Safinol 486", manufactured by Nissan Chemical Industry Co., Ltd.) were put in a container, ion exchange water was added such that the total mass is 100% by mass and the resultant product was mixed and stirred by a magnetic stirrer for 2 hours at room temperature to be sufficiently mixed. After stirring for 1 hour, filtration was performed by using a 5-µm membrane filter made of PTFE to obtain a pre-treatment liquid.

### 6. 2. 2. Preparation of Printed Matter

### Pre-treatment

A pre-treatment liquid was loaded onto a sponge roller, the roller was vertically and horizontally rotated 3 to 4 times with respect to the cloth (cotton cloth (Printstar heavyweight (white) 5.6 oz) described in Tables 1-1 and 1-2 or a polyester cloth (glimmer ACTIVE WEAR 3.5 oz Interlock dry T-shirt 001 white)) and the pre-treatment liquid was applied as uniformly as possible. The applied amount of the pre-treatment liquid was approximately 20 g per an area of A4 size. The cloth to which the pre-treatment liquid was applied was subjected to heat treatment at 165°C for 45 seconds by using a heat press and dried.

### Preparation of Printed Matter

To a region of the pre-treated dried cloth to which a processing liquid composition was applied, printing was performed with the ink composition described in each example at a resolution of 1440 dpi x 1440 dpi and in an application amount of 200 mg/inch², using a printer (trade name "SC-F200") manufactured by Seiko Epson Corporation. After printing, heat treatment was performed at 165°C for 5 minutes in a conveyer oven (hot air drying method) and fixation of the printed matter was performed.

### 6. 3. Evaluation Test

For each ink, evaluation of clogging, friction fastness and color developing properties was carried out.

### 6. 3. 1. Evaluation of Clogging Resistance

After preparing a printed matter in 6. 2. 2., clogging of the nozzle was checked and clogging resistance was evaluated according to the following evaluation criteria.

### Evaluation Criteria

S: The number of nozzles showing poor ejection and the number of nozzles of which ejection direction was displaced were equal to or less than 2.
A: The number of nozzles showing poor ejection and the number of nozzles of which ejection direction was displaced were equal to or more than 3 and equal to or less than 5.
B: The number of nozzles showing poor ejection and the number of nozzles of which ejection direction was displaced were equal to or more than 6.

### 6. 3. 2. Evaluation of Friction Fastness

A test for dyed color fastness against friction of the printed matter in each example was carried out by using a type I (clock meter) tester in accordance with a humidity test based on ISO-105 X12 and evaluation was performed according to the following evaluation criteria using a pollution gray scale.

### Evaluation Criteria

S: Friction fastness is 4 level or higher.
AA: Friction fastness is 3 level or 3/4 level.
A: Friction fastness is 2/3 level.
B: Friction fastness is 2 level.
C: Friction fastness is less than 2 level.

### 6. 3. 3. Evaluation of Color Developing Properties

An OD value of the printed matter obtained in each example was measured using a colorimeter (trade name "Gretag Macbeth Spectrolino", manufactured by X-RITE Corporation) and color developing properties were evaluated based on the obtained OD value, according to the following evaluation criteria.

### Evaluation Criteria

S: OD value is equal to or more than 1.45.
A: OD value is equal to or more than 1.40 and less than 1.45.
B: OD value is equal to or more than 1.35 and less than 1.40.
C: OD value is equal to or more than 1.30 and less than 1.35.
D: OD value is less than 1.30.

### 6. 4. Evaluation Result

The result of the evaluation test is shown in Tables 1-1 and 1-2.

All of the example inks, a pigment, a resin particle, an organic solvent including a specific amide compound and water were included and color developing properties were excellent. It appears that the specific amide compound acts as a resin dissolving solvent and therefore, leveling properties of the ink with respect to a recording medium are improved and thus color developing properties are improved. In addition, although not described in the table, the specific amide compound had a low standard boiling point and therefore compositions in which the specific amide compound was included gave excellent dryness of the ink after recording. In addition, in all of the examples, clogging resistance and friction fastness were also excellent.

More specifically, in Examples 1 to 4, when any of the pigments were used, color developing properties were excellent and clogging resistance and friction fastness were also excellent. In addition, in Examples 1 and 5 to 8, even when the number of carbons of the alkyl groups of the amide compounds were different, in any of the examples, color developing properties were excellent and clogging resistance and friction fastness were also excellent.

In Examples 1 and 9 to 11, when the content of the amide compound was equal to or more than 16% by mass and equal to or less than 30% by mass, the amide compound acted as a resin dissolving solvent and film formation of the emulsion was delayed and thus clogging resistance was excellent. This tendency was also the same in the case of Examples 13 to 16 in which cotton was used as the cloth.

In Examples 1 and 12, when the resin particle was a urethane resin, friction fastness was excellent.

In Examples 1, 17 and 18, when the content of the resin particle was high, friction fastness was excellent, but when the content of the resin particle became 10% by mass, clogging resistance deteriorated.

In Examples 1, 19 and 20, color developing properties were great even when different resin particles were used, but in a case where a cross-linking urethane resin was used as the resin particle, there came a result that friction fastness was excellent.

In Examples 1 and 21, when 1,2-propanediol was used as the organic solvent, there came a result that color developing properties, clogging resistance and friction fastness were excellent.

In Examples 19 and 22 to 26, when the content of the specific amide compound was equal to or more than 1.5 at a mass ratio with respect to the resin particle, clogging resistance was favorable and in particular, in a case where the content of the specific amide compound was equal to or more than 3.2, clogging resistance was excellent. In addition, when the content of the specific amide compound was high with respect to a total mass of the organic solvent, color developing properties were excellent.

In contrast to the examples, in the inks of Comparative Examples 1 to 4, which fall outside the scope of the claims, color developing properties were poor. More specifically, in Comparative Examples 1 and 2 in which the specific amide compound was not included, when printing was performed on any of PES and cotton, color developing properties were low and the resin particle caused clogging of the nozzles and thus the nozzles showing unfavorable ejection were found. Also in Comparative Examples 3 and 4 in which the specific amide compound was not included and resin particles different from that of Comparative Example 1 were included, color developing properties were low.

As described above, as the ink of the examples include a pigment, a resin particle, a specific amide compound and water, color developing properties were favorable in any of the polyester cloth and the cotton cloth and as the content of the specific amide compound or the content of the resin particle was within an appropriate range, clogging resistance and friction fastness also became excellent.

## Claims

1. A pigment printing ink jet ink composition comprising:
a pigment;
resin particles;
an organic solvent; and
water, wherein
the organic solvent comprises an amide compound represented by the following general formula (1), 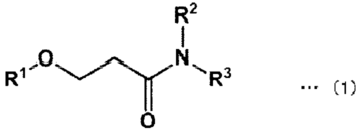
wherein R¹ represents a straight chain or branched alkyl group having 1 to 6 carbon atoms and R² and R³ each independently represent hydrogen atoms or a straight chain or branched alkyl group having 1 to 4 carbon atoms;
the ink composition further includes a dispersing agent;
the content of the resin particles is equal to or more than 3% by mass; and
the content of the amide compound represented by the general formula (1) is equal to or more than 18% by mass, with respect to a total mass of the pigment printing ink jet ink composition.

2. The pigment printing ink jet ink composition according to claim 1, wherein
the content of the amide compound represented by the general formula (1) is equal to or more than 80% by mass with respect to a total mass of the organic solvent.

3. The pigment printing ink jet ink composition according to claim 1 or claim 2, wherein the resin of the resin particles is a urethane resin.

4. The pigment printing ink jet ink composition according to any preceding claim, wherein
the resin of the resin particles is a polycarbonate-based urethane resin.

5. The pigment printing ink jet ink composition according to any preceding claim, which is adapted for use in printing onto a polyester cloth.

6. The pigment printing ink jet ink composition according to any preceding claim, wherein
the content of the amide compound represented by the general formula (1) is equal to or more than 18% by mass and equal to or less than 30% by mass with respect to a total mass of the ink composition.

7. The pigment printing ink jet ink composition according to any preceding claim, wherein
the mass ratio of the amide compound represented by the general formula (1) to the resin particles is equal to or more than 1.5:1.

8. A pigment printing ink jet recording method comprising:
ejecting the pigment printing ink jet ink composition according to any one of claims 1 to 7 from an ink jet nozzle and attaching the composition onto a fabric.

## Patentansprüche

1. Pigmentdrucktintenstrahltintenzusammensetzung, umfassend:
ein Pigment;
Harzpartikel;
ein organisches Lösemittel; und
Wasser, wobei
das organische Lösemittel eine Amidverbindung umfasst, dargestellt durch die folgende allgemeine Formel (1), 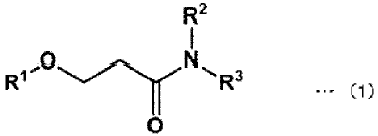
wobei R¹ eine geradkettige oder verzweigte Alkylgruppe mit 1 bis 6 Kohlenstoffatomen darstellt und R² und R³ jeweils unabhängig Wasserstoffatome oder eine geradkettige oder verzweigte Alkylgruppe mit 1 bis 4 Kohlenstoffatomen darstellen;
die Tintenzusammensetzung weiter ein Dispergiermittel enthält;
der Gehalt der Harzpartikel gleich oder größer als 3 Masseprozent ist; und
der Gehalt der Amidverbindung, die durch die allgemeine Formel (1) dargestellt ist, gleich oder größer als 18 Masseprozent in Bezug auf eine Gesamtmasse der Pigmentdrucktintenstrahltintenzusammensetzung ist.

2. Pigmentdrucktintenstrahltintenzusammensetzung nach Anspruch 1, wobei
der Gehalt der Amidverbindung, die durch die allgemeine Formel (1) dargestellt ist, gleich oder größer 80 Masseprozent in Bezug auf eine Gesamtmasse des organischen Lösemittels ist.

3. Pigmentdrucktintenstrahltintenzusammensetzung nach Anspruch 1 oder Anspruch 2, wobei das Harz der Harzpartikel ein Urethanharz ist.

4. Pigmentdrucktintenstrahltintenzusammensetzung nach einem vorstehenden Anspruch, wobei
das Harz der Harzpartikel ein auf Polycarbonat basierendes Urethanharz ist.

5. Pigmentdrucktintenstrahltintenzusammensetzung nach einem vorstehenden Anspruch, die zur Verwendung beim Drucken auf einem Polyesterstoff ausgebildet ist.

6. Pigmentdrucktintenstrahltintenzusammensetzung nach einem vorstehenden Anspruch, wobei
der Gehalt der Amidverbindung, die durch die allgemeine Formel (1) dargestellt ist, gleich oder größer 18 Masseprozent und gleich oder kleiner 30 Masseprozent in Bezug auf eine Gesamtmasse der Tintenzusammensetzung ist.

7. Pigmentdrucktintenstrahltintenzusammensetzung nach einem vorstehenden Anspruch, wobei
das Masseverhältnis der Amidverbindung, die durch die allgemeine Formel (1) dargestellt ist, zu den Harzpartikeln gleich oder größer als 1,5:1 ist.

8. Pigmentdrucktintenstrahlaufzeichnugnsverfahren, umfassend:
Ausstoßen der Pigmentdrucktintenstrahltintenzusammensetzung nach einem der Ansprüche 1 bis 7 aus einer Tintenstrahldüse und Anbringen der Zusammensetzung auf einem Stoff.

## Revendications

1. Composition d'encre de jet d'encre d'impression pigmentaire comprenant :
un pigment ;
des particules de résine ;
un solvant organique ; et
de l'eau, dans laquelle
le solvant organique comprend un composé amide représenté par la formule générale (1) suivante : 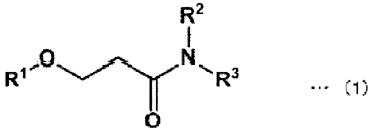
où R¹ représente un groupe alkyle à chaîne droite ou ramifié ayant 1 à 6 atomes de carbone et R² et R³ représentent chacun indépendamment des atomes d'hydrogène ou un groupe alkyle à chaîne droite ou ramifié ayant 1 à 4 atomes de carbone ;
la composition d'encre comprend en outre un agent de dispersion ;
la teneur des particules de résine est supérieure ou égale à 3% en masse ; et
la teneur du composé amide représenté par la formule générale (1) est supérieure ou égale à 18% en masse par rapport à la masse totale de la composition d'encre de jet d'encre d'impression pigmentaire.

2. Composition d'encre de jet d'encre d'impression pigmentaire selon la revendication 1, dans laquelle la teneur du composé amide représenté par la formule générale (1) est supérieure ou égale à 80% en masse par rapport à la masse totale du solvant organique.

3. Composition d'encre de jet d'encre d'impression pigmentaire selon la revendication 1 ou la revendication 2,
dans laquelle la résine des particules de résine est une résine d'uréthane.

4. Composition d'encre de jet d'encre d'impression pigmentaire selon l'une quelconque des revendications précédentes, dans laquelle
la résine des particules de résine est une résine d'uréthane à base de polycarbonate.

5. Composition d'encre de jet d'encre d'impression pigmentaire selon l'une quelconque des revendications précédentes,
laquelle est adaptée pour l'utilisation pour l'impression sur une étoffe en polyester.

6. Composition d'encre de jet d'encre d'impression pigmentaire selon l'une quelconque des revendications précédentes, dans laquelle
la teneur du composé amide représenté par la formule générale (1) est supérieure ou égale à 18% en masse et inférieure ou égale à 30% en masse par rapport à la masse totale de la composition d'encre.

7. Composition d'encre de jet d'encre d'impression pigmentaire selon l'une quelconque des revendications précédentes, dans laquelle
le rapport massique entre le composé amide représenté par la formule générale (1) et les particules de résine est supérieur ou égal à 1.5:1.

8. Procédé d'enregistrement à jet d'encre d'impression pigmentaire comprenant :
l'éjection de la composition d'encre de jet d'encre d'impression pigmentaire selon l'une quelconque des revendications 1 à 7 à partir d'une buse de jet d'encre et la fixation de la composition sur un tissu.
